# EUROPEAN PATENT APPLICATION

(11) **EP 4 492 691 A2**
(43) Date of publication of application: **15.01.2025**
(21) Application number: 24187677.0
(22) Date of filing: 10.07.2024
(51) Int. Cl.: H03M 7/32, G06F 11/30, H04L 43/02, H04L 69/04, G06F 11/34, H03M 7/34

(54) **DIFFERENTIAL ENCODING FOR TIME SERIES WITH COMPLEX PAYLOAD**

(30) Priority: 10.07.2023 US 202363525821 P; 03.07.2024 US 202418763387
(71) Applicant: Dynatrace LLC, Waltham, MA 02451 (US)
(72) Inventor: Moser, Herwig, 4020 Linz (AT); Schwarzbauer, Günter, 4020 Linz (AT)
(74) Representative: Bittner, Thomas L.

(57) **Abstract**

A technology for the adaptive compression of time series of complex monitoring data records is disclosed. Variants of complex monitoring data may describe multiple observations of the same type and from the same source from different timestamps, or they may describe multiple, related observations from the same source from the same timestamp. Meta-data for individual complex monitoring data records is analyzed to identify portions of the monitoring data record that can be omitted without loss of data to improve the compression rate. Different base compression methods may be applied for individual entities of monitoring data, depending on the data type used to represent the monitoring data entity, like XOR compression for floating point types. Compressed data is stored to a storage stream, where meta-data that is required to determine the omitted portions of complex data records is stored before corresponding observation payload data.

## Description

### Field

The disclosed technologies are generally directed to the compression of time series data, and more specifically to apply delta-compression to complex monitoring data records and to exploit properties of the complex monitoring data records to improve the compression rate.

### Background

Time series data, in form of sequences of observations of equivalent type, each observation performed on a specific point in time and described by a measurement, are the "workhorse" for describing natural phenomena, activities performed by computer applications and also execution performance of those computer applications. Although individual observations of time series data and also complete time series sequences do not require considerable storage space, the large amount of different time series creates amounts of monitoring data that make it difficult, or even impossible, to store or transfer acquired monitoring data as it was received.

To mitigate this problem, various compression algorithms directed for the efficient compression of time series data have been developed over time. As time series data is typically created, transferred, and stored incrementally, where individual observations are processed in a sequential or "stream" like fashion, also compression algorithms for time series data should follow the "streaming" approach and, optimally, only consider the currently processed observation record to perform the compression. Time series compression algorithms known in the art typically perform a form of delta compression, where not individual observations are stored, but a difference value between a last observation and a current observation is calculated and only this delta value is stored. Typically, less storage space is required to store the delta value than to store the received observation. On reading/reconstruction of stored time series data, the delta value is read from storage and applied to a previously restored previous observation value to reconstruct the current observation value.

Depending on the numeric type of observation values, different methods to calculate the delta are applied to increase the compression gain. For integer values, typically a numeric delta is calculated, as the value of this delta is typically smaller than the original observation values, and storing those smaller values requires less memory. For observations for which a relatively stable change rate can be assumed, a typical example for such an observation would be the timestamp describing the time when an observation was made, a "delta-of-delta" compression approach may be chosen, where for a sequence of measurements first the delta between consecutive measurements is calculated, and afterwards the delta of those deltas is calculated. If the change rate of the underlying measurement is stable, the result of this delta-of-delta calculation would be a series of values that are zero, or at least relatively near to zero, leading to a good compression rate.

For observations that are available in floating-point format, the delta between consecutive observations is typically calculated as a bitwise XOR of the consecutive values. It is assumed that the numerical values of consecutive observations are similar. Due to the storage format of floating-point numbers, the result a bitwise XOR of similar values typically leads to a bit sequence with longer sequences of leading and trailing bits that are zero. Instead of storing a full floating-point number (which would be required for a numerical delta), only the "relevant bit sequence", which is the bit pattern from the first to the last non-zero bit of the XOR result, plus data describing the position of this "relevant bit sequence" needs to be stored.

There are several variants of time series compression methods known in the art that are generally based on the principle of delta compression, that also use an XOR based delta calculation for floating-point data. A compression variant that tries to both exploit leading and trailing zero bits for floating-point compression is described in "Gorilla: A Fast, Scalable, In-Memory Time Series Database" by T. Pelkonen et al., published 2015 in Proceedings of the VLDB Endowment, Vol. 8, No. 12. An alternative approach which only exploits leading zero bits, and a variant which in addition maintains a dictionary of previous values to select the best matching (i.e., producing most leading zero bits) previous value for XOR delta compression is described in "Chimp: Efficient Lossless Floating Point Compression for Time Series Databases" by P. Liakos et al., published 2022 in Proceedings of the VLDB Endowment, Vol. 15, No. 11. Further, "Elf: Erasing-based Lossless Floating-Point Compression" by R. Li, published 2023 in Proceedings of the VLDB Endowment, Vol. 16, No. 7, describes a compression system which tries to identify bits in the binary representation of floating-point numbers which can be truncated and set to zero without losing accuracy. The goal of this approach is to generate large numbers of trailing zeros in floating-point monitoring data which can then be exploited via XOR-based delta compression.

Another approach to cope with the ever-increasing amount of monitoring data derived from continuous measurements and observations is to concentrate the monitoring data at or near its source to generate summary data representing and describing sets of individual observations. Such summary data is sufficient for most analysis tasks, and it also requires considerably less network bandwidth to transfer, and less memory to store. Types of summary data reach from plain count statistic records, which simply record a number of observations, minimum and maximum value of recorded observations, and a sum or average value of all recorded observations, to distribution describing records, which contain data for estimating the probability density function of the recorded observations, like various distribution moment values, or positions and values of support points describing samples of an estimated probability density function, which may be used to create an estimate of the complete probability density function.

Observation frequencies may vary vastly between different types of observations, and even for some types of observations between observation times. As an example, monitoring data for resource consumption, like CPU or memory usage may be created with a relatively low and constant frequency, whereas monitoring data describing the execution of individual transactions, like transaction or service response times, may occur with highly fluctuating and not predictable frequencies, reaching from hundreds or even thousands of observations per minute during peak-load times to zero observations for time ranges extending several minutes during low-load times. As a consequence, not all data of a summary data record may be required to describe the distribution of observation data for an observation period. As a simple, if the count of observations during the observation period is only one, it is not required in this case to transmit and store a minimum, maximum and an average or sum value, as they can all be reconstructed if the single observation value is known. Exploiting information about the number of observations and transferring and storing the observation count data and only the subset of concentrated observation data that is sufficient to reconstruct the aggregated monitoring data also helps to reduce the amount of data that needs to be transferred and stored.

As both delta compression and data source-side concentration of observation data aim to reduce the transfer and storage size for time series data, but operate on different abstraction levels and approaches, a combination of both methods would be desired to further reduce the amount of memory required to store time series data.

However, a straightforward combination of both methods is not feasible, as known delta compression approaches for time series data only consider "simple" observation data consisting of a timestamp (typically an integer value) and an observation (integer or floating-point value).

Applying such compression methods on more complex summary data like e.g., data records containing data for min, max and average/sum observation values, would create independent, delta-compressed time series for subsequent min, max and average/sum values. Such a simple application does not exploit additional data reduction potential that arises through summary data that is incomplete due to a small number of observations.

Consequently, there is need in the art for a combination of delta compression methods for time series data with data source side concentration or aggregation of monitoring data that also exploits data reduction opportunities for sparsely filled aggregated monitoring data.

This section provides background information related to the present disclosure which is not necessarily prior art.

### Summary

This section provides a general summary of the disclosure and is not a comprehensive disclosure of its full scope or all of its features.

The disclosed technologies are directed to improve the compression rate for time series of complex measurement data, where properties of data contained in individual complex measurement records are used to identify portions of monitoring data that can be omitted from compression and storage, while maintaining full reproducibility of complex measurement data from those portions that were compressed and stored. Portions of measurement data that are selected for compression and storage may be compressed using conventional delta-compression techniques.

Embodiments of the disclosed technologies are directed to the compression of pre-aggregated measurement records, where a measurement record represents multiple individual measurements. Such pre-aggregated measurement records may contain data describing the number of represented individual measurements and statistical data describing the measurement values.

Computer-implemented methods for encoding monitored data in a distributed computing network according to claims 1 and 10 are provided.

According to an aspect, a computer-implemented method for encoding monitored data in a distributed computing network is provided, comprising:
- receiving, by a computer processor, two or more aggregation records in a sequence of aggregation records, each aggregation record represents measures of a performance metric and includes an observation count of the measurements represented by the aggregation record and at least two composite statistics for the performance metric, where the performance metric indicates performance of the computer network during a period of time;
- constructing a data stream for the sequence of aggregation records, the data stream having a header section and a payload section; and
- storing the data stream in a non-transitory memory, wherein, for each of the two or more aggregation records, extracting the observation count from a given aggregation record and, in response to the observation count being one, processing the given aggregation record by
- deriving a measurement value for the performance metric from the given aggregation record,
- compressing the measurement value for the performance metric using delta compression, and
- compressing the observation count using delta compression, and
- formatting the payload section of the data stream with the compressed observation count and the compressed measurement value for the performance metric but excluding the at least two composite statistics for the performance metric.

The method may further comprise receiving a first aggregation record in the sequence of aggregation records, and storing the first aggregation record uncompressed in the payload section of the data stream.

The method may further comprise, in response to the observation count being greater than one, processing the given aggregation record by at least one of:
- compressing each of the at least two composite statistics using delta compression,
- compressing the observation count using delta compression, and
- formatting the payload section of the data stream with the compressed observation count and the compressed composite statistics.

Each aggregation record may further include a timestamp describing the period of time and, preferably, processing the given aggregation record may further comprise at least one of:
- compressing the timestamp in the given aggregation record using delta compression, and
- formatting the payload section of the data stream with the compressed timestamp.

The method may further comprise at least one of:
- retrieving the data stream from the non-transitory memory;
- processing the payload section of the data stream in sequence by decoding the compressed observation count and decoding data associated with the compressed observation count according to corresponding uncompressed observation count.

At least two composite statistics may include a minimum value for the performance metric during the period of time, a maximum value for the performance metric during the period of time, and at least one of an average of the measures during the period of time or a sum of the measures during the period of time.

The method may further comprise, in response to the observation count being two, processing the given aggregation record by at least one of:
- extracting a first measurement value for the performance metric from the minimum value,
- extracting a second measurement value for the performance metric from the maximum value,
- compressing the first measurement value and the second measurement value using delta compression,
- compressing the observation count using delta compression, and
- formatting the payload section of the data stream with the compressed observation count, the compressed first measurement value, and the second measurement value but excluding remainder of the at least two composite statistics for the performance metric.

The method may further comprise, in response to the observation count being greater than two and the minimum value for the performance metric equals the maximum value for the performance metric, processing the given aggregation record by at least one of:
- extracting a first measurement value for the performance metric from the minimum value,
- extracting a second measurement value for the performance metric from the maximum value,
- compressing the first measurement value and the second measurement value using delta compression,
- compressing the observation count using delta compression, and
- formatting the payload section of the data stream with the compressed observation count, the compressed first measurement value, and the second measurement value but excluding remainder of the at least two composite statistics for the performance metric.

The at least two composite statistics may include at least one of a minimum value for the performance metric during the period of time, a maximum value for the performance metric during the period of time, a sum of the measures during the period of time, and a set of statistical moments for the performance metric.

The method may further comprise, in response to the observation count being three, processing the given aggregation record by at least one of:
- extracting a first measurement value for the performance metric from the minimum value,
- extracting a second measurement value for the performance metric from the maximum value,
- extracting a third measurement value for the performance metric from the sum,
- compressing the first measurement, the second measurement and the third measurement using delta compression, and
- formatting the payload section of the data stream with the compressed first, second and third measurements but excluding the set of statistical moments.

The method may further comprise capturing measures of the performance metric using an agent instrumented in a software application executing on a computing device in the computing network.

According to another aspect, a computer-implemented method for encoding monitored data in a distributed computing network is provided, comprising:
- receiving, by a computer processor, two or more observation records in a sequence of observation records, each observation record represents measures of at least two performance metrics, where measurement value for one performance metric of the at least two performance metrics can be derived from measurement value for other performance metric of the at least two performance metrics;
- constructing a data stream for the sequence of observation records, the data stream having a header section and a payload section; and
- storing the data stream in a non-transitory memory, wherein, for each of the two or more observation records, processing a given observation record by
- compressing the measurement value for the one performance metric using delta compression, and
- formatting the payload section of the data stream only with the compressed measurement value for the one performance metric.

The one performance metric may be further defined as CPU usage percentage and/or the other performance metric may further be defined as CPU idle percentage.

The method may further comprise at least one of:
- retrieving the data stream from the non-transitory memory;
- extracting the compressed measurement value for the one performance metric from the data stream;
- decompressing the compressed measurement value for the one performance metric; and
- deriving the measurement value for the other performance metric from the uncompressed measurement value for the one performance metric.

The method may further comprise, for each of the two or more observation records, formatting the payload section of the data stream with an indicator for the one performance metric, where the indicator is associated with the compressed measurement value for the one performance metric.

The method may further comprise at least one of:
- retrieving the data stream from the non-transitory memory;
- extracting the compressed measurement value for the one performance metric from the data stream;
- decompressing the compressed measurement value for the one performance metric; and
- applying the indicator on the uncompressed measurement value to derive the measurement value for the other performance metric from the uncompressed measurement value for the one performance metric.

The method of may further comprise capturing measures of the at least two performance metrics using an agent instrumented in a software application executing on a computing device in the computing network.

Formatting the payload section of the data stream further may comprise applying a variable-length quantity storage scheme to store integer values in the payload section of the data stream. The variable-length quantity storage scheme may include at least one of a first marker bit for storing integer value of zero, a second marker bit whose value distinguishes between a first range of values and a second range of values, and storage size bits indicating number of bits needed to store an integer value.

According to an example, a computer-implemented method for encoding monitored data in a distributed computing network may be provided, comprising:
- receiving, by a computer processor, a histogram record representing measures of a performance metric and the performance metric indicates performance of the computer network during a period of time, wherein the histogram record includes a plurality of histogram tuples such that each histogram tuple contains a bucket index value and a multiplicity value;
- applying a first compression variant to the histogram record by compressing the bucket index values of the plurality of histogram tuples using delta compression;
- applying a second compression variant to the histogram record by compressing the multiplicity values of the plurality of histogram tuples using delta compression;
- selecting one of the first compression variant or the second compression variant, where the selected compression variant requires less storage space; and
- forming a data stream from compressed data of the selected compression variant.

Applying a first compression variant to the histogram record may include at least one of sorting the plurality of histogram tuples in ascending order according to bucket index values to form a sorted list of histogram tuples, calculating a delta value between consecutive bucket index values in the sorted list of histogram tuples, decrementing the delta value by one, and storing the decremented delta value using a variable-length quantity storage scheme.

Applying a second compression variant to the histogram record may include at least one of sorting the plurality of histogram tuples in ascending order according to multiplicity values to form a sorted list of histogram tuples, calculating a delta value between consecutive bucket index values in the sorted list of histogram tuples, and storing the delta value using a variable-length quantity storage scheme.

A first variant of the embodiments is directed to the compression of count statistical records, which may contain, next to a number of observed measurement values, also the minimum, maximum and sum or average value of observed measurement values. It may be determined based on the reported number of measurements if only one of minimum or maximum, both minimum and maximum or all three values are required to reconstruct a full count statistical record.

A second variant embodiment is directed to the compression of moment sketch records, which may contain next to observation count, minimum and maximum observed value, a set of exponential and logarithmic statistical moments calculated for the observed measurement values.

Those statistical moments may be used to estimate the statistical distribution of the observed measurement values. The observation count may be used in this variant embodiment to determine if it is sufficient to compress and store only a subset of moment values because the other moment values can be restored from the stored subset.

A third variant embodiment is directed to the delta-compression of data records that contain data, e.g., in form of support points, to estimate a distribution function of observed measurement values, like a quantile function. Observation count data may be used to determine whether it is required to compress and store support point data to reconstruct the distribution function. Support point data may only be compressed and stored if it is required.

One common objective of above embodiments is to provide a compression technique that adapts well to fluctuating volumes of measurement data. Acquisition of measurement data may depend on the occurrence of certain events, like the request of a specific service by customers. During peak times, hundreds of such events may occur per specific time interval (e.g., per minute or per second), whereas only a few, or even no measurement events may occur during low-activity times. A suitable compression method for time series of complex, pre-aggregated measurement records should be capable to adapt to both scenarios.

Other embodiments are directed to exploiting functional dependencies between different measurements contained in a complex measurement record. If a functional dependency is present between two measurements, it is most times sufficient to compress and store only one of the two measurements, because the second, not stored measurement can be reconstructed by applying the functional dependency on the stored measurement. Therefore, those embodiments may use identified functional dependencies between measurements to identify depending measurement values and exclude them from compression and storage.

Still other embodiments of the disclosed technologies are directed to an efficient application of delta compression mechanisms on data points represented as histograms, containing multiple bucket index/observation count tuples as observation data. For compression, variants of these embodiments may first sort the tuples by the bucket index, and then create delta compressed buckets by first calculate a delta value for adjacent tuples and then generate tuples containing the delta bucket index and the corresponding observation count. As bucket index values are unique within a histogram, the delta bucket index values may be decremented by one. The created delta bucket index/observation count pairs may be encoded in Varint format to form compressed histogram tuples.

Another variant may sort received histogram tuples according to their observation counts and then create tuples containing delta compressed observation counts. As with this approach multiple tuples having the same delta observation count, but different bucket index may occur, decrementing the delta observation count by one is not possible, as this may lead to negative delta values. The so created bucket index/delta observation count pairs may also be encoded in Varint format to form compressed histogram tuples.

Still other variants may, first create a compressed histogram version according to both of the above variants (i.e., compression using bucket index deltas and compression using observation count deltas), then select and store the variant requiring lower memory. This variant may in addition store an indicator flag identifying the selected histogram compression variant.

Yet other embodiments of the disclosed technology may apply a bit oriented Varint encoding variant to compress and store positive integer values. Different to byte oriented Varint encodings, where at least one byte is required to store an integer value, a bit oriented Varint encoding may only require 1 bit to store an integer value. The proposed bit oriented Varint encoding uses up to two marker bits, where the first marker bit distinguishes between the value 0 and other values, and the second marker bit distinguishes between values in the range of 1 to 2⁸ and values between 2⁸+1 up to 2⁶⁴. The proposed bit-oriented encoding variant uses 3 or 6 bits (3 bits for value range 1 to 2⁸ and 6 bits for higher values) to store the number of significant bits, followed by the so specified number of significant bits. One advantage of this bit-oriented encoding scheme is that the value 0 can be represented with just one bit. Delta compression variants with high probability of generating 0 values, like the delta-of-delta compression for time stamp data with constant time difference, or the delta compression of histogram bucket index values greatly benefit from this Varint encoding scheme.

Further areas of applicability will become apparent from the description provided herein. The description and specific examples in this summary are intended for purposes of illustration only and are not intended to limit the scope of the present disclosure.

### Description of embodiments

The drawings described herein are for illustrative purposes only of selected embodiments and not all possible implementations, and are not intended to limit the scope of the present disclosure.
- FIG. 1: provides a block diagram of a monitoring system that applies delta-compression on pre-aggregated measurement records to reduce the storage size of stored time series data. Time series data is stored in a segment-oriented storage, which segregates stored time series data into segments by measurement specific attributes, like measurement origin or type, and by the time when measurements are acquired.
- FIG. 2: describes data records that may be used to store individual measurement data and data records that may be used to store pre-aggregated measurement data.
- FIG. 3: shows a storage layout that may be used to store delta compressed time series of complex payload data.
- FIG. 4: conceptually describes basic delta compression approaches for simple integer values and floating point values.
- FIG. 5: provides flowcharts for the delta compression and decompression of arbitrary pre-aggregated complex time series data that exploits the number of measurements represented by pre-aggregated observation data to improve the compression rate.
- FIG. 6: describes the compression of basic pre-aggregated records that contain measurement count data, minimum, maximum and sum or average value of observed measurements.
- FIG. 7: shows the decompression of basic pre-aggregated measurement records.
- FIG. 8: shows a flowchart describing the delta-compression of momentum sketch records.
- FIG. 9: describes the decompression of delta-compressed momentum sketch records.
- FIG. 10: describes the delta-compression of data records containing condensed sample data for the estimation of distribution functions of observed measurement values, like quantile functions.
- FIG. 11: shows the decompression of delta-compressed data records containing data for the estimation of measurement value distribution functions.
- FIG. 12: provides data records to store complex measurement data containing multiple, functionally depending measurements and flowcharts describing delta-compression and decompression of such data records.
- FIG. 13: provides a data record for storing uncompressed histogram data, a memory layout for storing delta compressed histogram data, and two variants of delta compressed histogram buckets.
- FIG. 14: shows flow charts of process for an adaptive delta compression of histogram data.
- FIG. 15: contains flow charts describing the decompression of adaptively delta compressed histogram data.
- FIG. 16: provides a visualization of the memory layout of a proposed bit-oriented Varint encoding scheme and flow charts of processes related to the encoding of integer values into the bit-oriented Varint encoding schema for reading such encoded values and reconstructing encoded integer values.

Corresponding reference numerals indicate corresponding parts throughout the several views of the drawings.

### Detailed description

The disclosed embodiments are directed to the lossless compression of streams of time series data representing multiple observations. To reduce downstream data transfer and processing costs, monitoring systems tend to aggregate or otherwise combine individual observations into complex data records that represent multiple individual observations at or near the source of the monitoring data. However, even with such source-side optimizations, the sheer amount of to be stored time series data makes an efficient compression of stored time series data inevitable.

As time series data is constantly received, and the amount of simultaneously received time series data depends on the activities performed by the monitored system, a compression approach that combines low computational costs with considerable compression rates is desired. In addition, the compression mechanism should also support stream-like processing, where data is compressed on-the-fly, between receipt and storage. Delta-compression is a compression approach that fulfills all those requirements and that is successfully applied to "simple" time series data, where measurement data is represented by one scalar value. However, this approach was not yet applied to complex time series data.

As the rate of generated observation data depends on the activities (e.g., service requests, transaction executions) performed by the monitored system, received complex monitoring data records may in some cases represent a small number of individual observations, which makes a more efficient form of storage possible. The desired compression system should identify and exploit such "low load" situations to further improve the compression rate.

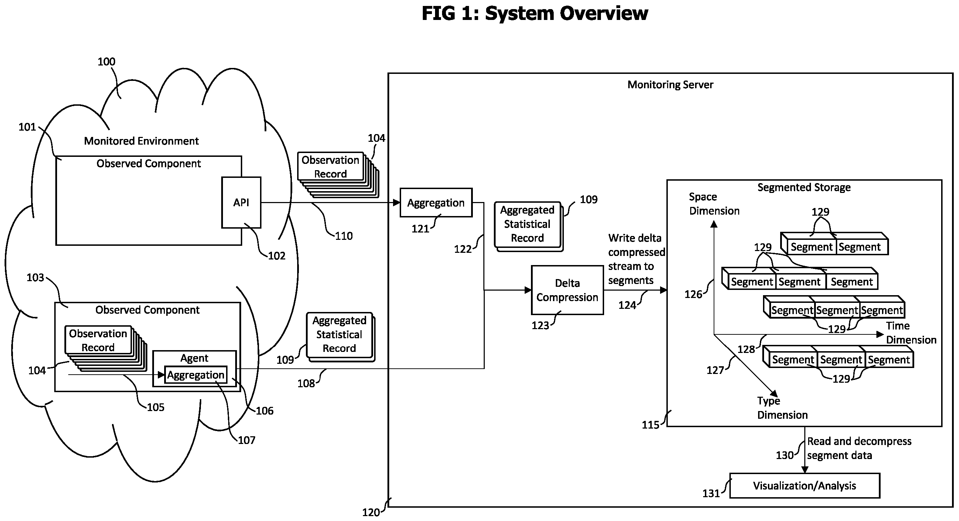

A block diagram of a monitoring system that performs source-side aggregation of monitoring data, delta-compression of the aggregated monitoring data and storage of the compressed data in a segment-oriented storage is shown in FIG. 1.

Observed components 101 and 103 are operating in a monitored environment 100. Monitoring agents 106 are deployed to some variants of observed components 103. Those monitoring agents observe activities performed by the observed component 103 and generate observation records 104 describing those observations. The observation records 104 are received by an aggregation unit 107 of the monitoring agent, which creates aggregated statistical records 109 from received observation records. Aggregates statistical records represent multiple observations of the same type. As an example, a monitoring agent may observe received service requests of a service provided by the observed component 103 to which it is deployed, measure the time until a corresponding service response is created and store the measurement results in observation records 104. The aggregation unit 107 may receive those observation records, segregate them into groups and create an aggregated statistical record 109 for each group. As an example, the aggregation unit may select observation records that were acquired during a specific time interval (e.g., the last 10 seconds) and then create an aggregated statistical record representing observed service response times during that time interval.

Created aggregated statistical records 109 may then be sent via a connecting computer network (not shown) to a monitoring server 120.

In some observed components 101, no monitoring agent may be deployed due to technical or organizational reasons. In such scenarios, application programming interfaces (APIs) 102 provided by the observed component may be used to acquire monitoring data. Typically, those APIs provide individual observations in form of observation records 104, which may be transferred to the monitoring server 120 for aggregation, compression, and storage. In some variant scenarios, APIs may already provide functionality to pre-aggregate observations. In this case, aggregate statistical records 109 may be sent to the monitoring server 120 instead of observation records.

The monitoring server 120 may forward received observation records 104 to a server-side aggregation unit 121 to create corresponding aggregated statistical records representing multiple observations, like the aggregation unit 107 located at the monitoring agent 106.

The received or server-side created aggregated statistical records 109 are forwarded to a delta compression unit 123. Conceptually, the compression unit determines for each received aggregated statistical record a "delta" or "difference" between the currently aggregated statistical record and the previously received aggregated statistical record. Typically, storing only the "delta" or "difference" requires less storage space than storing the original received aggregated statistical record. As a consequence, to reconstruct a given aggregated statistical record using its delta compressed representation, also its predecessor aggregated statistical record is required, on which the stored "delta" value is applied to reconstruct the value of the given aggregated statistical record. The compression unit creates a sequence or "stream" of delta values between consecutive aggregated statistical records 109, which is sent to a segmented storage unit 115. If no previous aggregated statistical record is available, the compression unit may forward the received record uncompressed to the storage unit. It may also send an uncompressed aggregated statistical record to the storage unit after a specific number of aggregated statistical record were received and compressed, or after a specific time is elapsed. To read and interpret delta compressed values it is required to start with a known, uncompressed value on which the stored delta value is applied to recreate the next uncompressed value. Intermediate storage of uncompressed values improves the decompression for arbitrary values, as it is no longer required to read and decompress from the beginning of the compressed data stream but only from the nearest previous uncompressed value.

The segment storage unit 115 organizes received compressed time series data in segments 129, where a specific segment contains related time series data that represents a specific time period. Segments may either be formed according to the origin of stored time series data (space dimension 126), the type of the stored time series data (type dimension 127), a combination of both or other criteria. The chosen segment definition and organization depends on the desired usage of the data. It is desired to keep time series data that is typically queried, interpreted, and analyzed together, in the same segment 129. The time period covered by a given segment may either be fixed or determined by the storage space required of a segment. For a fixed time period regime, a current segment is terminated and a new one is started when a specific time is elapse. For a storage space driven regime, a current segment is terminated and a new one is started when the storage size of the current segment exceeds a certain limit. In both cases, the writing of uncompressed aggregation statistical records (also referred to as "key frames") is synchronized with the start of new segments 129, in a way that the first aggregation statistical record that is written to a segment for a specific time series is written in uncompressed form.

A visualization and analysis module 131 may read and decompress 130 time series data stored in the segmented storage for various visualization and analysis tasks.

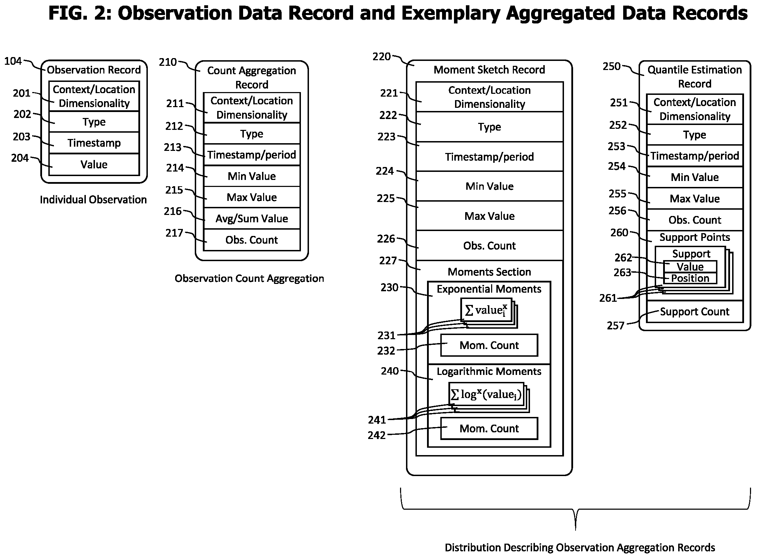

Coming now to FIG. 2, which describes the observation record 104 and some exemplary aggregated observation record types.

Observation records 104 may be used to describe individual observations and may contain but are not limited to context dimensionality data 201, which describes the context of the observation, like the location where the observation was performed, e.g., in form of a network address of a host computing system on which the observation was performed, or information describing the components for which the observation was performed, like data describing a computing system or a process for which the observation was performed, type description data 202 describing the type of the observation, like memory or CPU usage, response time or error rate, timestamp data 203 describing the point in time when the observation was made and observation value data 204 containing the actual measured value.

Count aggregation records 210 may be used for a simple aggregation of multiple observations of the same type. Aggregated observations are described by the number of represented observations, the extreme values (minimum and maximum values), and data for the average value of represented observations (either sum of represented values or average value).

A count aggregation record 210 may contain but is not limited to context dimensionality data 211, describing the context of the represented observations and type data 212 describing the type of the represented observations, timestamp/time period data 213 describing the time period covered by the count aggregation record, minimum value 214 and the maximum value 215 of the represented observations, the sum of represented values or the average of the represented values 216, and observation count data 217 describing the number of represented individual observations.

Count aggregation records 210 represent observations having the same context dimensionality and type. Therefore, one context dimensionality specification and one type specification are sufficient to describe all observations represented by a count aggregation record.

Count aggregation records are typically generated in sequences, and a specific count aggregation record represents all observations occurred between generation of the previous count aggregation record and the generation of the specific count aggregation record. Therefore, it is sufficient to store the generation time of the given count aggregation record as time period data 213, because the time period represented by the specific count aggregation records can be calculated from its generation time and the generation time of the previous count aggregation record.

Moment sketch records 220 are, similar as count aggregation records, directed to represent sets of observations of the same type. In addition, they also store values for statistical moments derived from the represented observation values. The stored statistical moments may be used to estimate the probability density function for the represented observations, which may then be used to estimate properties of this function, like quantiles.

Next to context and dimensionality location data 221, observation type, 222, time period data 223, min value 224, max value 225 and observation count 226, a moment sketch record may contain but is not limited to a moments section 227 to store exponential and logarithmic moments derived from the observation values.

A moment section 227 may contain but is not limited to an exponential moments portion 230 and a logarithmic moments portion 240, each of those portions containing lists of values for corresponding distribution moments. In addition, the exponential and logarithmic moments portions may contain a moment count field 232 and 242 to store the number of contained moment values. The exponential moments portion 230 may contain value records 231 for the first n exponential moments of the distribution, where n corresponds to the value stored in the moment count filed 232, and the logarithmic moments portion 240 may contain value records 241 for the first m logarithmic moments of the distribution where m corresponds to the value stored in the moment count field 242. The nth exponential moment is calculated by taking each observation value to the nth power and summing up the results. The nth logarithmic moment is calculated by calculating the value of the logarithm of each observation value, taking the calculated logarithm value to the power of n, and summing up the results.

A quantile estimation record 250 may be used to store aggregated monitoring data in form of support points that represent sample data for the distribution of the observed values. Variant support points may describe sampled observation data in form of an observation value range covered by the support point and the number of observations that fall into this range, or they may represent a specific quantile and provide an estimate for the value of this quantile.

Same as count aggregation records and moment sketch records, quantile estimation records may contain context/location dimension data 251, measurement/observation type data 252, timestamp/time period data 253, data for the minimal 254 and the maximum 255 observed value, and data for the number of represented observations 256. In addition, a quantile estimation record may contain a support points section 260 to store support point data in form of support records 261, and a support point count field 257 specifying the number of stored support points.

A support record 261 may contain a value 262 and a position 263 field to define a specific support point. In some variants, position data may be used to identify a value range and value data may be used to specify the number of observations that fall into this value range, and in other variants the position may identify a specific quantile and the value field may contain an estimate for the value of this quantile.

Min value 214, max value 215 and average or sum value 216 of count aggregation records 210, min value 224, max value 225 and exponential 231 or logarithmic 241 moments of moment sketch records, or min value 254, max value 255 or values 262 and positions 263 of support point records 261 of quantile estimation records 250 may also be referred to as composite statistics for a performance metric.

Observation records 104, count aggregation records 210, moment sketch records and quantile estimation records 250 may be used to store data representing performance metrics for a monitored computing environment 100.

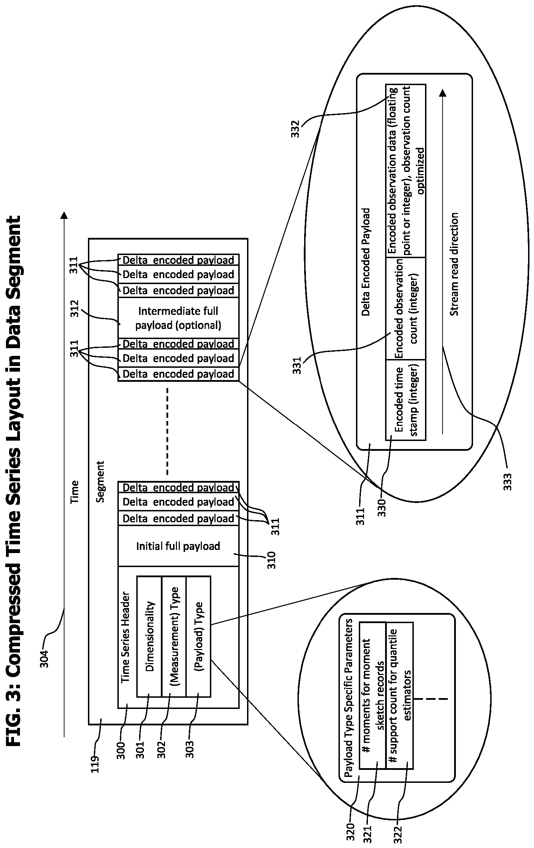

Coming now to FIG. 3, which conceptually describes the storage layout of compressed time series data in a data segment 119.

The processing direction 304, either to write new compressed observation data to the segment, or to read and decompress observation data is from left to right. The storage layout starts with time series header data 300, which may contain but is not limited to dimensionality data 301 and type data 302 to specify semantics, origin and type of the observations recorded to the time series storage and payload type data 303, describing the form in which observation data is stored, e.g., in form of compressed count aggregation records 210, moment sketch records 220, or quantile estimation records 250.

For incoming observation data records, time series header data may be used to select the time series storage to which an incoming observation record belongs. As an example, an incoming count aggregation record 210 with specific context/location dimensionality data 211 and type data may be appended to a time series storage having the same dimensionality 301 and type 302 data and having a payload type 303 indicating count aggregation records.

On reading time series data from time series storage, payload type data 303 may be used to determine how compressed observation data needs to be interpreted to reconstruct the correct observation payload records.

Some payload types may contain additional configuration data that is required to restore compressed observation data records, like for moment sketch records 220 data for the number of stored (and to be read and decompressed) moments 321, or for quantile estimation records, the number of support points 322.

After the time series header 300, an initial full payload record 310 of the first received observation for the time series is stored. The aim of delta compression is to store the delta between a previous and a current observation instead of the current observation to reduce storage requirements. As there is no previous observation available for the first observation record, it is stored uncompressed. Subsequent observations are stored in delta encoded form 311. In some embodiments, intermediate full payload records 312 may be stored. To read and decompress a specific delta compressed observation record, it is required to start with an uncompressed observation record that was recorded before the specific observation record and then decompress all following observation records until the specific observation record is reached. Placing intermediate full payload records in the time series storage layout decreases the read time for intermediate observation records, because it reduces the number of additional observation records that need to be read and decompressed. Provisions may be implemented to distinguish between compressed and intermediate full payload record, like specifying and storing a marker flag to distinguish between compressed and intermediate full payload records, or applying conventions, like defining an occurrence frequency of intermediate full payload record, like every 50^{th}, 100^{th} or 1000^{th} record being an intermediate full payload record. For fast read access, an intermediate full payload record index may be maintained, which e.g., maps a time stamp of a full payload record to its storage position. If a request to decompress a compressed payload record that has a specific time stamp, this index may be used to identify the storage location of the intermediate full payload record with the next smaller time stamp as starting point of the decompression process.

The storage layout of an individual delta compressed payload record starts with the storage of the observation time in delta encoded form 330, followed by the delta encoded observation count 331, and delta encoded observation data 332. Delta encoding of observation data takes advantage of the observation count of received observation record to reduce the to be stored data. As an example, if the observation count is one, it does not make sense to store separate values for minimum and maximum observation values, as those values are identical.

Processing direction 333(read and write) of individual delta encoded payload records 311 is also from left to right. Especially for reading and decompressing such payload records it is important to first read and decompress observation count data 331, as the observation count data determines the amount of data that has to be read and decompressed subsequently.

It is important that delta encoded payload follows a specific format, where encoded observation count data 331 is stored before encoded observation data 332, because observation count data determines, during decompression, the amount of encoded observation data 332 that needs to be read and decompressed.

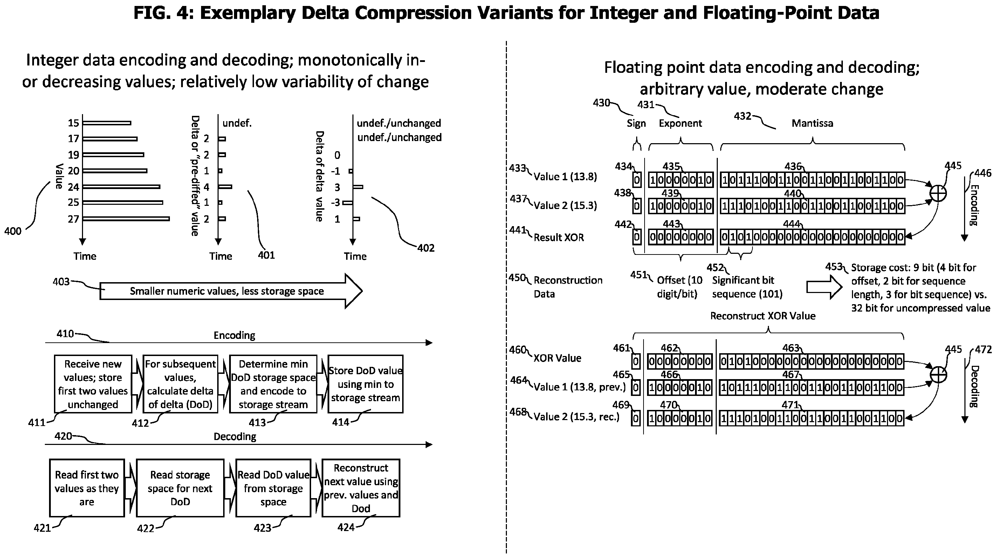

Coming now to FIG. 4, which conceptually describes exemplary delta compression methods for individual integer and floating-point values.

An approach directed to the compression of integer data types that aims to minimize the to be stored numerical value is shown on the left side of FIG. 4, and a method for floating point values that uses bitwise logical XOR operations to generate a delta representation between two floating point values that has a small memory footprint is described on the right side of FIG. 4.

The "delta-of-delta" approach is an effective way to compress sequences of integer values. The idea is to first calculate the delta between consecutive original values and then calculate and store the delta between consecutive deltas of the original values. In the optimal case, the original values change with a constant rate, which results in delta-of-delta values that are zero, which can be stored very effectively, requiring just one bit. Also, if the change rate is fluctuating slightly, the resulting delta-of-delta values are small and those small values can be stored efficiently. Various encoding schemes for integer values that adapt the storage format to the represented value to save storage space are known in the art, one example is the "varint" scheme used by Google's protobuf serialization library. Typically, such schemes would first store data describing the storage space that is used for the encoded integer value, like the number of bytes that are used to store the value. For small integer numbers which are the result of a delta-of-delta compression, often one or two bytes are sufficient to store the result value. Compared with the standard storage format for integers, which requires from 4 (integer) to 8 (long) byte, this storage format provides a considerable compression factor. As delta-of-delta values may be negative, also the sign of the result value needs to be stored. One approach to cope with negative values in such situations is the "ZigZag" encoding scheme, which spreads the positive value range by the factor two, which maps every positive value to an even number (e.g., 1 -> 2, 2 -> 4,...) and then maps negative values to the odd-numbered gaps (e.g., -1 -> 1, -2 -> 3,...). Other approaches may simply store a marker bit to indicate whether the stored value is positive or negative.

Chart 400 describes a typical time series of integer values with a slightly fluctuating increase rate. The timestamps for cyclically acquired observations is a typical example for such a time series. Chart 401 shows the result of the first delta calculation, and chart 402 shows the result of the delta-of-delta calculation. To be represented numeric values and also storage space required to store those values shrink with every delta operation 403.

Some received observation data may already be considered as delta values. In this case, only one step to create delta values is required to generate a delta-of-delta representation of the original values. One example for such an observation is the number observations that are represented by a received observation record. The value for the number of observations received with each observation record may be considered as the delta value of an overall number of observations that were performed between the current and the last observation record. For such types of observation data, only one delta operation is required on the receiver side to generate a delta-of-delta representation.

The processing sequences to encode and decode integer values according the delta-of-delta scheme are conceptually described on the bottom left part of FIG. 4.

Encoding 410 is started with step 411, in which the first two received values are stored uncompressed, as it is not possible to calculate a delta-of-delta value from only one or two values. Some embodiments may only store the first value uncompressed, and virtually duplicate the first value on receipt of the second value to be able to already calculate a delta of delta value for the second received value. In this case, the first delta would always be zero, as the first real value and the virtual value received before the first value are identical, and the delta-of-delta value between the first and the second value would be equal to the delta value between first and second value, as the virtual delta value between the first value and the virtual value before the first value is zero.

Step 412 then receives a subsequent observation value for which a delta-of-delta value can be calculated because sufficient previous observations are available. Following step 413 determines the storage space required to store the calculated delta-of-delta value and writes data describing this required storage space to the storage stream. Finally, step 414 writes the calculated delta-of-delta value to the storage stream.

Decoding 420 of delta-of-delta compressed integer values starts with step 421, which reads the first two integer values uncompressed (or only the first value, if a virtual value before the first received value was assumed to already determine a delta-of-delta value for the second received value).

Following step 422 then starts reading the first compressed value by reading data describing the amount of storage space that was used to store the delta-of-delta value (this is the data written by step 413). Afterwards, step 423 uses the data describing the storage space for the actual delta-of-delta value to read the delta-of-delta value from the storage space. Finally, step 424 uses the read delta-of-delta value to reconstruct the original observation value. For the reconstruction, step 424 may use the two previous values, which are known, to first calculate the delta between the two previous values, and then apply the read delta-of-delta value between the last and the to be reconstructed value on the delta value between the previous value and the value before the previous value to calculate the delta between the last known and the to be reconstructed value. The to be reconstructed value is then determined by applying the calculated delta to the last known value.

A variant of delta compression that takes advantage of the storage format of floating-point data and that uses bitwise XOR operations to calculate a representation of the difference between consecutive values is shown on the right side of FIG. 4.

Floating-point storage formats are typically divided into a sign bit 430, which specifies the sign of the represented floating-point value, an exponent section 431, which specifies the value range of the represented floating-point value in terms of orders of magnitude, and a mantissa section 432 which specifies the represented value within the specified order of magnitude. It is assumed that consecutive observations have similar values, which typically leads to unchanged exponent sections and in most cases also unchanged lower bits of the mantissa.

Applying bitwise XOR operations on the bits of consecutive floating-point observations creates a bit sequence with a considerable number of leading zeros (as sign and mantissa are identical), followed by a bit pattern describing the difference between the consecutive values followed by a sequence of trailing zeros (because the lower bits of the mantissa are also identical). To store the difference between the two floating-point values it is sufficient to store the bit pattern that describes the difference between the two values, and position and size of the bit pattern within the storage layout of the respective floating-point format. To reconstruct a second floating-point value from a given first floating-point number and the stored bit pattern and size and position data, it is sufficient to reconstruct the result of the XOR operation to create the delta value by reading the bit pattern using the stored size data, place it into a sequence of zero bits that has the same length of the floating-point storage format, and then apply a bitwise XOR operation between the bits of the first floating-point and the reconstructed result of the XOR operation to compress the delta between first and second value.

The bitwise representation of the values 13.8 433 and 15.3 437 are shown with their respective sign bit 434 and 438, exponent section 435 and 439 and mantissa section 436 and 440. To encode the difference between those values, first a bitwise XOR 445 operation is performed on the corresponding bits of both values, which yields a result 441 starting with a sign bit 442 with zero value, a zero exponent value 443 and a mantissa value 444, for which the first bit is zero, followed by a significant bit sequence 452 of "101", followed by 19 trailing zeros. To store the result of the XOR operation, it is sufficient to store the offset of the significant bit sequence, which requires 4 bits, the length of the significant bit sequence, which requires 2 bits, and the actual significant bit sequence "101", which requires 3 bits. This sums up to just 9 bits of storage space in comparison to 32 bits which are required to store a single-precision floating-point number.

To decode an XOR-delta compressed floating-point number, the data describing the result of the bitwise XOR operation that was applied on the first (already known) floating-point number and the second (to be decompressed) one is first read from the storage medium. First, data describing the length of the significant bit sequence is read from the storage medium, which is then used to read the significant bit sequence itself from the storage medium. Afterwards, the offset of the significant bit sequence may be read form the storage medium. The read data is used to reconstruct the memory layout of the XOR result (see sign bit 461, exponent bits 462 and mantissa bits 463). To decode 472 the second floating-point value, a bitwise XOR operation 445 is applied on the binary representation of the first floating point value 464 and the reconstructed result of encoding XOR 445 operation to create the binary representation (see sign bit 469, exponent bits 470 and mantissa bits 471) of the second floating-point number 468.

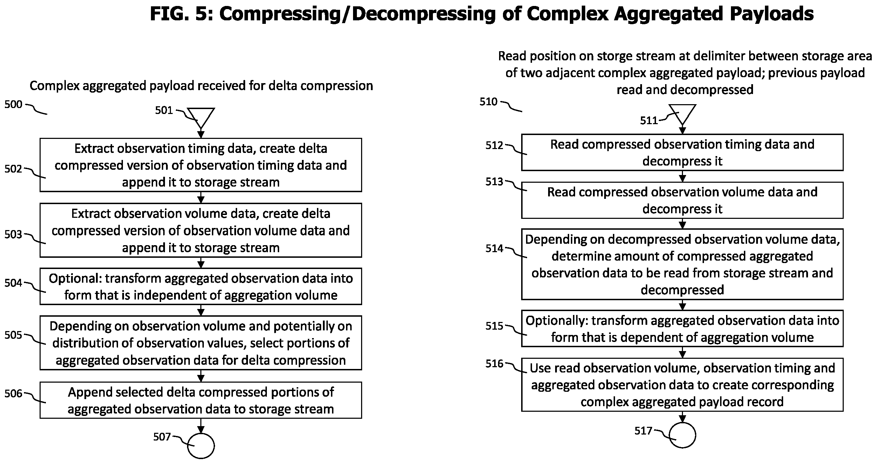

Referring now to FIG. 5, which conceptually describes delta-compression based encoding and decoding processes for complex time series payloads representing multiple observations, which take advantage of the number of represented observations to increase the compression ratio.

The process of encoding received complex aggregated payloads 500 starts with step 501, when a payload record is received for compression. Following step 502 extracts data describing the timing of the observations represented by the received payload record, creates a delta-compressed version of the observation timing data, and appends it to the storage stream that is used to store the delta-compressed data for the time series to which the received payload record belongs.

Afterwards, step 503 extracts observation volume data from the received record, creates a delta-compressed version of the observation volume data and appends it to the storage stream. Subsequent optional step 504 may then transform aggregated observation data that depends on the amount of represented observation data (e.g., a value for the sum of all represented observations) into a representation that is independent of the amount of represented observation data (e.g., an average of all represented observations). The aim of step 504 is to increase the probability of similar observation data values, as delta-compression is more effective on similar data.

Following step 505 may then evaluate the observation volume data extracted in step 503 to determine whether all received observation data needs to be compressed and stored, or if it is sufficient to store a subset of the received data. As an example, for a received payload record representing only one observation value, it is not required to store separate minimum, maximum and sum/average value, as they are all identical.

The portions of the received observation data identified by step 506 is then delta compressed with corresponding previous values and appended to the storage stream by step 506. The process then ends with step 507.

Coming now to the process 510, which describes the decompression of complex aggregated payload.

The process starts with step 511, when a previous complex aggregated payload record is available in uncompressed form. The previous record may be available because it was previously decompressed, or because it was the first recorded payload record, which was stored uncompressed, due to a missing previous record to perform delta-compression. The read position is at the start of the storage stream representing the to be decompressed payload record.

Following step 512 may then read the delta-compressed observation timing data and decompress it by applying the delta-decompression procedure on the read delta value and the observation timing value of the previous payload record.

Afterwards, step 513 reads and decompresses observation volume data (using observation volume data from the previous payload record).

Subsequent step 514 may then first use the observation volume data that was read and decompressed by step 513, to determine the amount of to be read and decompressed observation data, and then read the determined amount of observation data from the storage steam and decompress it.

Following optional step 515 may transform observation data that is independent from the observation volume (e.g., average) to a form that is dependent from it (e.g., sum), if step 504 was applied during compression to create an observation volume independent variant for efficient storage.

Step 516 may then use the read and decompressed observation timing and volume data, and (partial) observation value data to reconstruct a complex aggregated payload record representing the decompressed data.

The process then ends with step 517.

It is noteworthy that writing and reading of compressed time series data needs to be performed in a sequential, stream-oriented form, where data is read and written in a sequential order. Therefore, it is important to write data for observation count/volume to the storage stream before actual observation count values, because during decompression, data is read in the same sequence and data for observation count/volume is required to determine the amount of data that needs to be read during decompression.

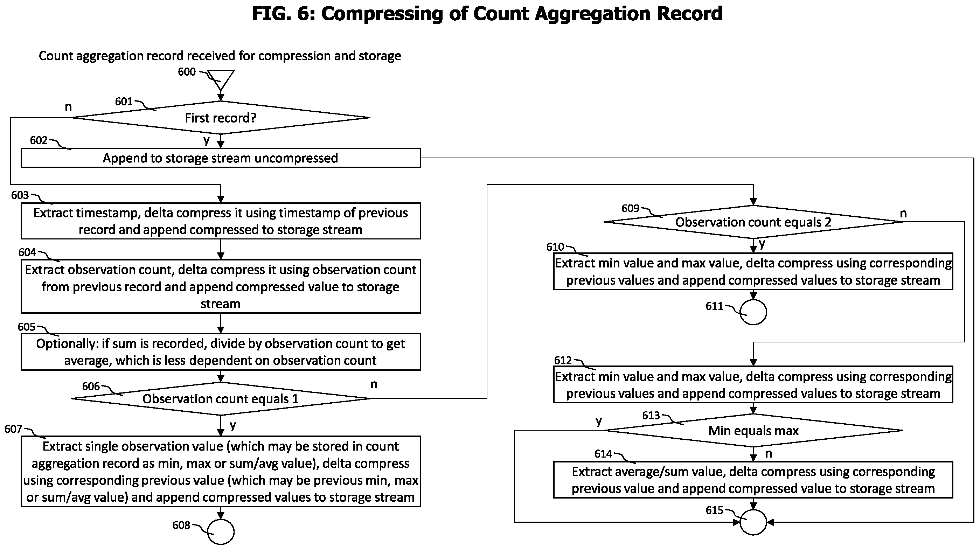

Delta-compression of count aggregated records 210 is shown in FIG. 6.

The process starts with step 600, when a new count aggregation record 210 is received, and subsequent decision step 601 determines whether the received record should be compressed. Step 601 may decide to store the record uncompressed, if it is the first record that is received for the to be recorded time series, if a new storage segment 129 is started with the receipt of the record, or it is desired to store the record as intermediate full payload 312, to improve the performance for partial reads of time series data. If step 601 decides that the received record is to be stored uncompressed, step 602 is executed, which appends the received record 210 uncompressed to the storage stream. The process then ends with step 615.

Otherwise, step 603 is executed, which extracts timestamp 213 data from the received payload record, delta-compresses it, using the timestamp value of the previous payload record, and appends the delta-compressed value to the storage stream.

Following step 604 then extracts and compresses the observation count value 217 for the to be compressed payload records and writes it to the storage stream. Optional step 605 may, if sum value is recorded in the received record, divide it by the observation count to get an average for compression and storage, as average values tend to be more stable, and may therefore be compressed more efficiently by delta-compression.

Decision step 606 may then determine whether observation count is exactly 1, and in this case continue with step 607, which compresses and stores only this one value to the storage stream. It may be determined by some convention which value of the previous payload record 210 is used to perform the delta-compression. This may be one of min 214, max 215 or average/sum 216 value, however it is important that the corresponding decompression process uses the same previous value for decompression. After step 607, the process ends with step 608.

If observation count is greater than one, the process continues with decision step 609, which determines whether observation count has the value 2. If observation count is two, then min 214 and max 215 value are extracted from the received payload record 210, delta-compressed using the corresponding previous values and the result of the delta-compression is appended to the storage stream by step 610. The process ends with step 611 after step 610.

If observation count is greater than 2, step 612 is executed, which extracts min 214 and max 215 value, compresses them and stores the compressed representation of those values to the storage stream. Following decision step 613 may determine whether the received min 214 and max 215 values are equal to each other. In this case, step 613 may terminate the process with step 615 without compressing and storing the sum/average value, because in this case, the sum/average can be determined from already stored min and max values. If otherwise min and max values are not equal, step 614 is executed which creates a delta-compressed representation of the received average/sum value using the average/sum value of the previous payload record and appends it to the storage stream.

Some variant embodiments may, in case of min and max being equal, not store both values, but only one value and a flag indicating that those values are identical. However, those variants would also need to write this flag when both values differ to assure consistent decompression in both cases.

After step 614, the process ends with step 615.

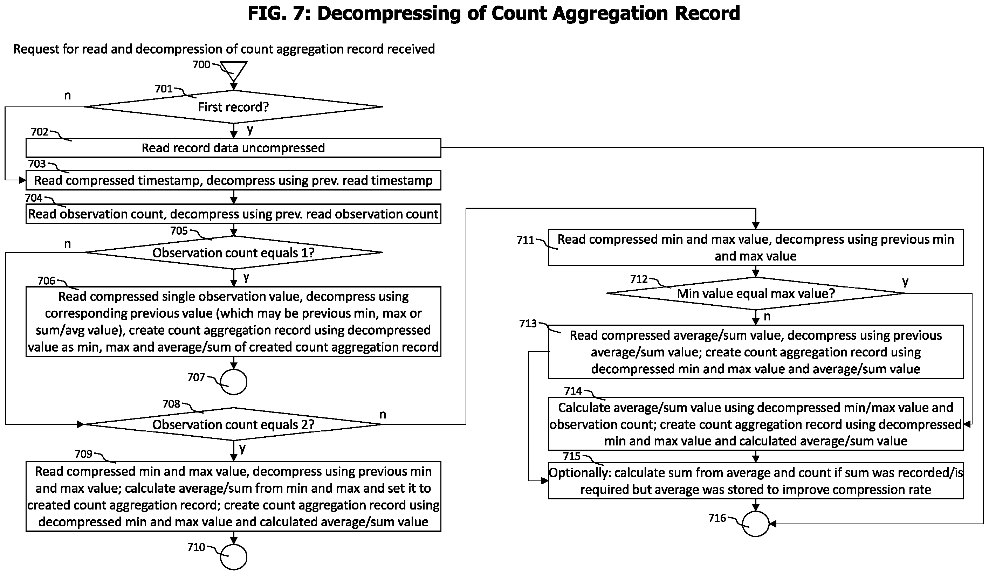

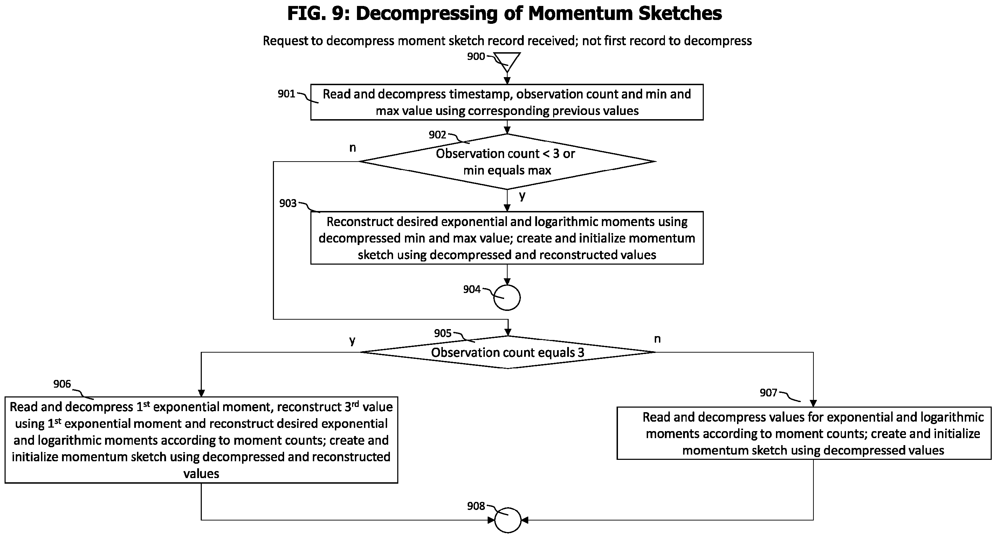

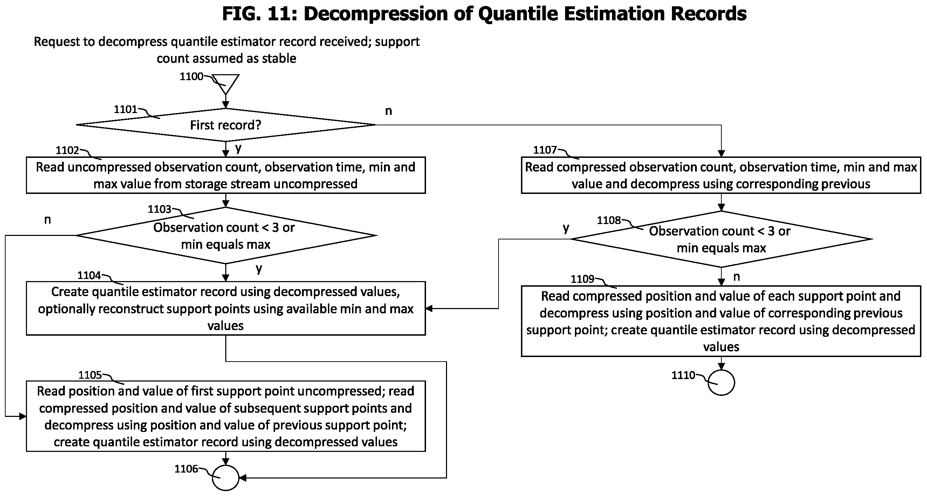

Referring now to FIG. 7, which depicts the process of decompressing a count aggregation record. The goal of decompressing is to read and decompress observation data from a storage stream representing a time series and to create a data record (e.g., count aggregation record 210, 220 or 250) representing this observation data. To correctly interpret the compressed data that is read from the storage stream, the decompression process needs first to determine which type of data record needs to be created. Decompression processes may first read payload type data 320 stored in the time series header section 303 to determine which type of payload needs to be reconstructed. For time series storing count aggregation records, payload type may indicate to reconstruct a count aggregation record 210, for moment sketch records, this payload data may indicate to reconstruct a moment sketch record 220 and so on. Before actual decompression of a specific type of payload record is started, as described in FIG. 7 (count aggregation record), FIG. 9 (moment sketch record) or FIG. 11 (quantile estimation record), the decompression process needs to first read payload type 303 data from the time series header 300 to determine which type of payload record needs to be reconstructed from compressed data.

The process starts with step 700, when a request to read and decompress a count aggregation record 210 was received. If the to be read count aggregation record is uncompressed (e.g., because it is the first record in a storage sequence, or an uncompressed intermediate record), decisions step 701 continues with step 702, which reads the uncompressed count aggregation record from the storage stream and then terminates the process with step 716.

Otherwise, decision step 701 continues with step 703 and 704, which read the compressed representation of timestamp value and observation count value from the storage stream and decompress them using the corresponding previous values.

Afterwards, decision step 705 determines whether the value of the decompressed observation count is 1, and in this case continues with step 706, which reads one compressed value and decompresses it using a corresponding previous value (the same previous value that was used for compression in step 601 of the process described in FIG. 6), and then uses the decompressed value to reconstruct a corresponding count aggregation record. As in this case, min, max and sum/average have the same value, the one decompressed value is sufficient for the reconstruction. The process then ends with step 707. In a concrete example, a request to decompress the next payload record for a time series containing count aggregation records may be received. The previous count aggregation record may be known, e.g., because it was already decompressed, and may have a count value of 10, a min value of 1, a max value of 5 and a sum value of 30. The process may first read compressed data for the timestamp from the current read position of the storage stream, which advances the read position to the location where observation count value is stored. Reading observation count data advances the read position to the location where subsequent observation value data is stored. Then, timestamp data and observation count data may be decompressed using corresponding values of the previous count aggregation record. The reconstructed observation count value determines the following reading and decompression steps. In this case the observation count is one, which indicates that the to be decompressed count aggregation record represents only one observation. As in this case, min 214, max 215 and sum 216 have the same value, it is sufficient to store only one value in the storage stream. Therefore, the process only ready one value from the storage stream, which advances the read position to a location of the storage stream on which data representing the next count aggregation record is stored. A convention is applied to determine the value of the previous count aggregation record that is used to decompress the read observation value. It is not relevant if this is the previous min, max or sum value, as long as the same previous value that was used to compress the read value is also used to decompress it. After the one read observation value was decompressed, it is used as value for min 214, max 215 and sum 216 of the to be reconstructed count aggregation record.

If otherwise the observation count is not equals one, step 708 is executed, which determines whether the observation count is 2. In this case, step 709 is executed, which reads and decompresses two values from the storage stream, which represent the min 214 and max 215 value of the to be decompressed count observation record 210. The sum/average value 216 can be reconstructed from min and max if there were only two observations. The decompressed and reconstructed values are used to create a corresponding count aggregation record 210, and the process afterwards ends with step 710.

Coming back to the above, concrete example, reading, and decompressing the observation count value would now yield two, which indicates that the to be decompressed count aggregation record only represents two observations, which are also the minimum and maximum of the represented values. As no other values are represented by the to be decompressed count aggregation record, the sum value can be reconstructed by adding up the already decompressed min and max values. Therefore, no third observation value needs to be read and decompressed to reconstruct the count aggregation record.

If observation count is greater than 2, decision step 708 continues the process with step 711, which reads compressed values for min and max and decompresses them using their corresponding previous values.

Following decision step 712 determines if the decompressed min and max values are equal. In case they are equal, step 712 continues with step 714, which use the (equal) min and max values and potentially the observation count value to reconstruct the average/sum value, and to create the requested count aggregation record using the decompressed and reconstructed values. Afterwards, optional step 715 may be executed, which calculates a sum value from a reconstructed or read average value if required. The process then ends with step 716. If read and decompressed min and max value are equal, then all values represented by the to be decompressed count aggregation record have the same value. In this case, it is not required to store a sum value, regardless of the number of observations represented by the count aggregation record, because the sum value can in this case be reconstructed by multiplying the min or max value with the observation count.

If decisions step 712 determines that decompressed min and max are not equal, it continues the process with step 713, which reads the compressed representation for the average/sum value from the storage stream and decompresses it using the previous average/sum value. Afterwards, step 713 reconstructs the requested count aggregation record using the decompressed values. Steps 715 and 716 are executed afterwards to terminate the process.

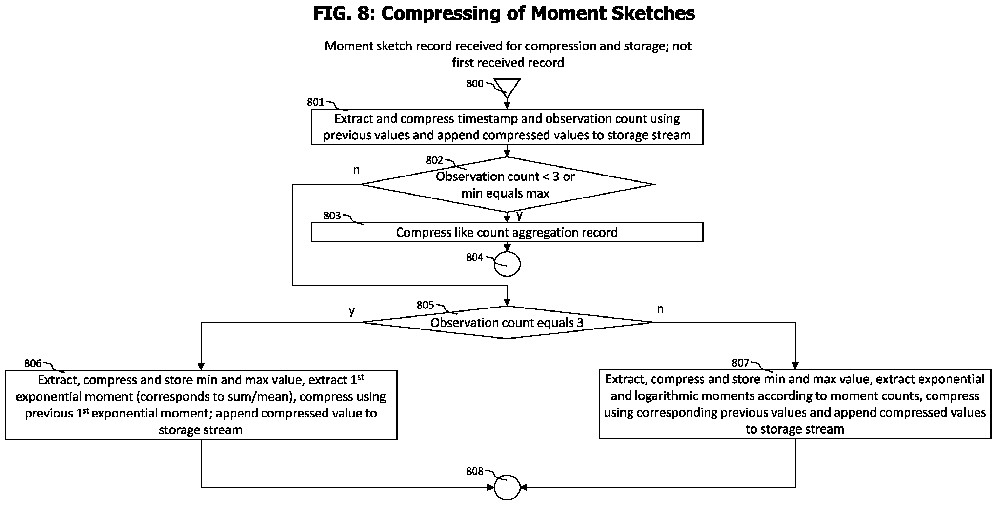

The process of compressing received moment sketch records 220 is shown in FIG. 8.

The process starts with step 800, when a moment sketch record 220 is received for compression. As it is not possible to compress the first received record using delta-compression mechanism, and the first record needs to be stored uncompressed, it is assumed that the received moment sketch record is not the first received record of this type and category.

Following step 801 may then extract timestamp data 223 and observation count data 226, delta-compress the extracted data items using corresponding previous values and append the compressed data to the storage stream.

Decision step 802 then determines whether the received moment sketch record represents less than tree individual observations or if min and max value are identical. In this case, step 803 is executed, which compresses and store min 224 and max 225 values following the same procedure as it is performed for count aggregation records 210. See steps 606 to 611 of the process "Compressing of Count Aggregation Record" in FIG. 6. After step 803, the process ends with step 804.

Otherwise, decision step 805 is executed, which determines whether the observation count equals 3, and in this case continues with step 806, which compresses and stored min max value and the value of the first exponential moment.

If observation count is 3 and min value, max value and the first exponential moment (which is equivalent to the sum of observed values) are known, all three observed values can be reconstructed. Min and max are already known, and the third value can be reconstructed by subtracting min and max from the first exponential moment.

Consequently, it is sufficient to store those three values and to omit values of all other exponential or logarithmic moments, because the values of those other moment can be calculated from the reconstructed observation values. The process afterwards ends with step 808.

If observation count is greater than three, step 807 is executed instead, which first extracts, compresses and stores min value and max value and then extracts values for exponential 231 and logarithmic 241 moments from the received moment sketch record, delta-compresses those values using corresponding previous values and appends the compressed representations of those values to the storage stream. The process then ends with step 808.

The decompression of delta-compressed moment sketch records 220 is shown in FIG. 9.

The decompression step starts with step 900, with the receipt of a request to decompress a delta-compressed moment sketch record. As the first record of a time series is stored uncompressed due to a missing previous record to determine a delta value, it is assumed that the received decompression request is not directed to the first moment record of the time series, but to a subsequent one.

Following step 901 may then read the delta-compressed format of timestamp, observation count and min and max value, and decompress these values using the corresponding previous value. Step 901 may first read and decompress observation count data. The observation count data may then be used to determine if two distinctive values for min and max need to be read and decompressed (observation count > 1), or if only one value was stored to represent min and max (observation count equals 1). Afterwards, decision step 902 may determine whether the decompressed observation count has a value smaller than three, or if min and max value are identical, and in these cases continue the process with step 903, which reconstructs required exponential and logarithmic moments using known min and max values and observation count, to create the requested moment sketch record. In these cases, either only two values, min and max were recorded, or multiple identical values were recorded. In both cases, the already read and decompressed data is sufficient to reconstruct the values of required statistical moments. The process then ends with step 904.

If decision step 902 determines that the observation count is not smaller than 3, the process continues with decision step 905, which determines whether the observation count is 3, and in this case continues with step 906, which first reads the value of the additionally stored first exponential moment. Then step 906 may reconstruct the third observation value (in addition to min and max value) by subtracting min and max from the value of the first exponential moment and use the reconstructed original observation values to calculate the values of the desired exponential and logarithmic moments, and to create the requested moment sketch record. The process afterwards terminates with step 908.

If otherwise decision step 905 detects that the observation count is greater than 3, the process continues with step 907, which also first reads and decompresses the stored values for all desired exponential and logarithmic moments from the storage stream. Finally, step 907 uses the read and decompressed values to create the requested moment sketch record. The process then ends with step 908.

Coming now to delta-compression based storage and retrieval of complex aggregated time series records in form of quantile estimation records 250.

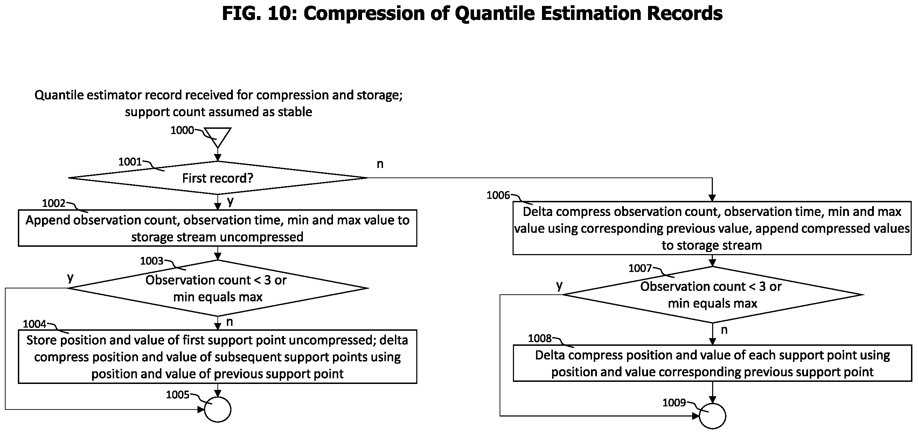

The compression and storage of such records 250 is depicted in FIG. 10, and starts with step 1000, when a new quantile estimation record is received for compression. It is assumed that the support count 257 is stable and it is therefore sufficient to store the support count as payload specific parameter 322.

Following decision step 1001 determines if the received quantile estimation record is the first one for the to be recorded time series, and in this case continues with step 1002, which appends observation count 256, observation timing data 253, and min 254 and max 255 value to the storage stream uncompressed.

Following decision step 1003 then determines whether the observation count for the received quantile estimation record is smaller than 3, or if min and max value are identical. In both cases, no additional values need to be stored to reconstruct the quantile estimation record, and the process is terminated with step 1005.

Otherwise, decision step 1003 continues with step 1004, which may store value 262 and position 263 of the first support point record 261 uncompressed. Subsequent values and positions for support points may be stored using delta-compression mechanism, where delta values are calculated between consecutive support point records 216 of the same quantile estimation record 250. E.g., the first value/position pair may be stored uncompressed, for the second value/position pair, the difference between first and second value and position may be calculated and stored, and so on. Support point records may be sorted according to their position value 263. After step 1004, the process ends with step 1005.

If otherwise the received quantile estimation record is not the first one for the recorded time series, decision step 1001 continues the process with step 1006, which performs a delta-compression of observation count 256, observation timing data 253, min 254, and max 255 value, using corresponding previous values and then appends the generated delta values to the storage stream. Afterwards, decision step 1007 determines whether the observation count 256 for the received quantile estimation record 250 is smaller than 3, or if min 254 and max 255 value are equal. In both cases it is not required to store data for support point records 261, as quantile data can be derived from already stored data items. Therefore, the process ends with step 1009 in this case, without storing any support point data.

Otherwise, step 1008 is executed which performs delta-compression of value 262 and position 263 of support point records 261 of the received quantile estimation record with corresponding values and position data from the previous quantile estimation record. Support point records may be sorted according to their position 263, and a corresponding previous support point for a given support point may be the one with the same sorting position. If no previous support points are available, e.g., if the previous received quantile estimation record represented less than three observations and storage of support point data was omitted, step 1008 may either assume zero values for previous support point data, or it may apply delta compression between consecutive support points, as described in step 1004.

After step 1008, the process ends with step 1009.

Referring now to FIG. 11, which describes the decompression of delta-compressed quantile estimation records. The process starts with step 1100, when a request to provide a decompressed quantile estimation record 250 is received. Following decision step 1101 then determines whether the requested record is the first one that was received for the time series and in this case continues with step 1102, which reads uncompressed values for observation count 256, observation time 253 and min 254 and max 255 value from the storage stream.

Afterwards, decision step 1103 determines whether observation count 256 is less than three, or if values for min and max are equal. In both cases, no additional support point data is required for quantile estimation and the process continues with step 1104, which creates a corresponding quantile estimation record using the already read data. Step 1104 may optionally reconstruct support point data using available min and /or max values. The process then ends with step 1106.

Otherwise, decision step 1103 continues the process with step 1105, which first reads value 262 and position 263 for the first support point from the storage stream uncompressed. Afterwards, delta-compressed value and position data is read for subsequent support point records and decompressed using respective previous values. Finally, step 1105 uses the read and decompressed values to create the requested quantile estimation record. Afterwards, the process ends with step 1106.

If decision step 1101 detects that the requested quantile estimation record is not the first for the recorded time series, it continues the process with step 1107, which reads delta-compressed values for observation count 256, observation timing 253, min 254 and max 255 from the storage stream and decompresses them using the corresponding previous values.

Following decision step 1108 determines whether observation count is smaller than 3, or the value of min and max are equal, and in those cases continues the process with the (already described) step 1104.

Otherwise, step 1109 is executed, which reads delta-compressed position and value for support point records from the storage stream and decompresses them using position and value data from corresponding previous support point records. The decompressed values are used to create the requested quantile estimator record, and the process then terminates with step 1110.

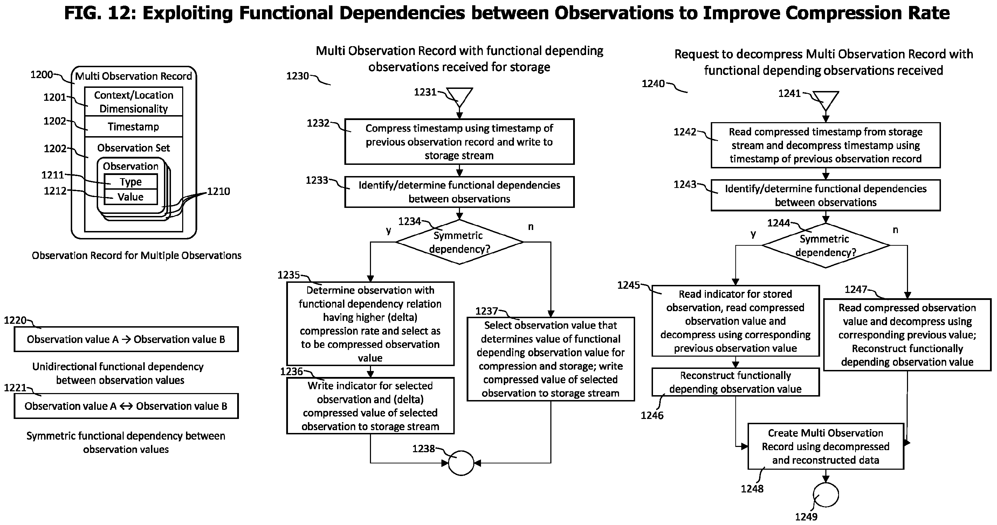

Coming now to FIG. 12, which conceptually describes an approach to exploit functional dependencies between observations to further improve the compression rate for time series with complex payload records. In this case, the time series payload does not represent multiple, consecutive observations of the same type, but a set of observed values, which may have been acquired simultaneously. Such observation sets may be represented using multi observation records 1200. A multi observation record may contain but is not limited to context/location dimensionality data, which may be used to describe origin of the conveyed observation values, timestamp data 1202, specifying the point in time or the time period when the observations were made, and an observation set 1202, containing one or more observation records 1210, each observation record specifying an individual observation by its type 1211 and value 1212.

Different types of functional dependencies between observation values are possible, including unidirectional dependencies 1220, where the value of one observation determines the value of another observation, but not vice-versa, and bidirectional dependencies 1221, where the value of a first observation determines the value of a second observation, but it is also possible to determine the value of the first observation from the value of the second observation.

The basic idea to improve the compression rate is to only store determinative observation values and omit the dependent ones, as the dependent values can be reconstructed by applying the functional dependency on the stored values.

For unidirectional dependencies, it is sufficient to describe the functional dependency in a time series header and to just exclude the depending values from compression and storage. For bidirectional dependencies, it may be opportune to select the observation value that compressed better and omit the other one on a record-by-record basis and in addition store indication data that specifies which value has been stored.

The process 1230 of compressing and storing a received multi observation record starts with step 1231, with the receipt of a multi observation record. It is assumed that the received multi observation record is not the first one for the to be recorded time series, as delta-compression of timestamp data and selected observation values requires a previous record to calculate delta values, and the first values that are subject to delta-compression need to be stored uncompressed. However, functional depending observation values may already be omitted for the first received multi-observation record.

Following step 1232 uses timestamp data 1202 of a previously received multi observation record 1200 to delta-compress timestamp data 1202 of the currently received multi observation record, and then appends the delta-compressed data to the storage stream.

Subsequent step 1233 then determines functional dependencies between received observation values, and following decision step 1234 determines for identified functional dependencies if they are symmetrical.

Detection of functional dependencies may be based on types 1211 of observation records 1210 received with the multi observation record and known functional dependencies that are linked with those observation types. In a simple example, observations of type "CPU usage percentage" and "CPU idle percentage" may be provided with a multiple observation record. A functional dependency linked with observation types "CPU usage percentage" and "CPU idle percentage" may indicate that the sum of "CPU usage percentage" and "CPU idle percentage" is always 100. Consequently, it is sufficient to store either "CPU usage percentage" or "CPU idle percentage" and then reconstruct the not stored value by subtracting the stored one from 100. Data describing functional dependencies and linking those dependencies with observation types may be stored in time series headers 300, or in other global configuration data.

If a symmetric dependency was identified by decision step 1234 between two observations, step 1235 is executed, which identifies the observation of the two depending observations that yields the better compression rate. Step 1235 may e.g., determine the delta representation for both observation values with their respective previous values and then select the representation that requires less storage space.

Following step 1236 may then first write an indicator for the observation value that was selected for storage to the storage stream (e.g., an identifier for the type 1211 of the selected observation value), followed by the delta-compressed representation of the selected observation value. The process then ends with step 1238.

If decision step 1234 determined a unidirectional dependency between two observation values, the observation value that determines the other observation value is delta-compressed and stored by step 1237. As in this case the unidirectional dependency determines which observation value is compressed and stored, no additional indication needs to be stored. The process then ends with step 1238.

Coming now to the process 1240 of decompressing multi observation records containing observations with functional dependencies. The process starts with step 1241, when a request to decompress a multi observation record 1200 is received. Following step 1242 reads compressed timestamp data and decompresses it using previous timestamp data. Following step 1243 identifies functional dependencies between observation represented by the time series to which the to be decompressed multi observation record belongs. Step 1243 may e.g., read data from the time series header 300, which defines those dependencies. In addition, data describing the sequence in which multiple observations are stored in the storage stream may be stored in the time series header. As an example, multi observation records may contain observations for "CPU temperature", "CPU used percentage" and "CPU idle percentage". Data stored in the time series header may specify that first observation values for "CPU temperature" are stored to the storage stream, followed by "CPU used percentage" values. In addition, data stored at the time series header may describe a functional dependency between "CPU used percentage" and "CPU idle percentage". With this format data, the read process may first read and decompress "CPU temperature" value data, then read and decompress "CPU used percentage" value data and finally use the "CPU used percentage" and the describe functional dependency between "CPU used percentage" and "CPU idle percentage" to calculate the observation value for CPU idle percentage".

For each functional dependency identified by step 1243, following decision step 1244 may determine whether it is a symmetric dependency.

If a symmetric dependency is identified, the process continues with step 1245, which first reads the indicator for the observation value that was compressed and then reads the delta-compressed observation value and decompresses it using the corresponding previous value. Following step 1246 then applies the dependency function on the decompressed observation value to reconstruct the depending observation value that was not stored.

If decision step 1244 determines that the functional dependency is not symmetric, the compressed observation value is read and decompressed using the respective previous value and the functional dependency is applied to reconstruct the second, not stored observation value.

Steps 1244 to 1247 may be executed multiple times if the multi observation record that is to be reconstructed contains a larger set of observation records 1211, and multiple functional dependencies need to be applied to reconstruct multiple, not stored observation values.

After all observation values are either read and decompressed or reconstructed by applying functional dependencies, step 1248 is executed, which creates the requested multi observation record 1200 out of read and decompressed and reconstructed values. The process then ends with step 1249.

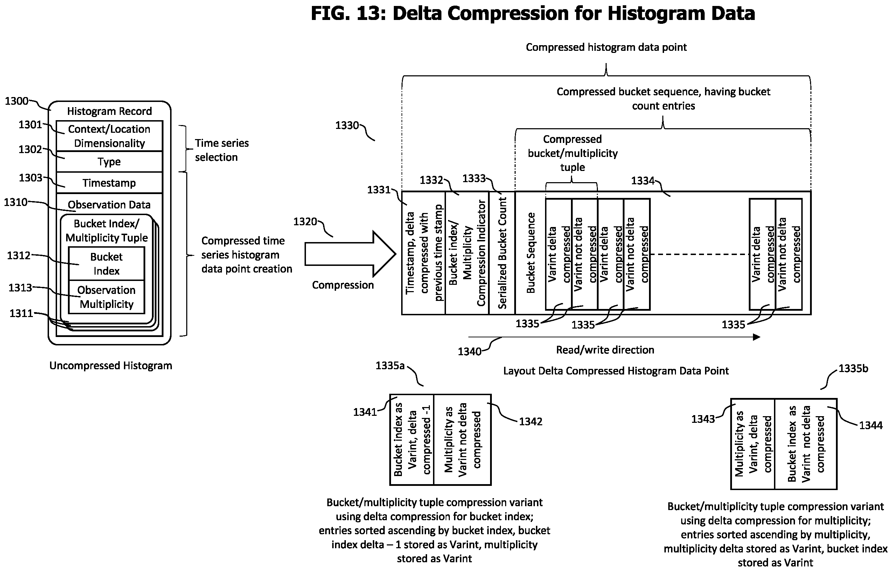

Referring now to FIG. 13, which describes delta compression variants for monitoring data in form of histograms.

Histogram data may be received in form of histogram records 1300, where one histogram record contains one histogram representing multiple observations, where individual observations are assigned to histogram buckets according to their values.

A histogram record 1300 may contain but is not limited to context/location dimensionality data 1301, describing the origin of the data that was used to create the histogram, like name of a host computing system or a process from which the observation data for the histogram was acquired, type data 1302, which specifies type or kind of observation data, like memory or CPU usage, network bandwidth usage and the like, timestamp data 1303 specifying the point in time or time period during which the observations forming the histogram were performed, and an observation data section 1310 containing the actual histogram data.

The observation data section 1310 may contain one or more bucket index/multiplicity tuples 1311, and a bucket index/multiplicity tuple may contain but is not limited to a bucket index field 1312 and an observation multiplicity field 1313. The bucket index 1312 may identify a histogram bucket, which represents a value range defined by a lower and an upper value bound, and the observation multiplicity may specify the number of observations that fall within the value range represented by the histogram bucket.

Context/location dimensionality data 1301 and type data 1302 of a histogram record may be used to select a time series for the histogram record, and timestamp data 1303 and observation data 1310 may be used to create a datapoint which is appended to the selected time series.

The histogram datapoint may be compressed 1320 before it is appended to the time series according to the layout 1330 for compressed histogram datapoints.

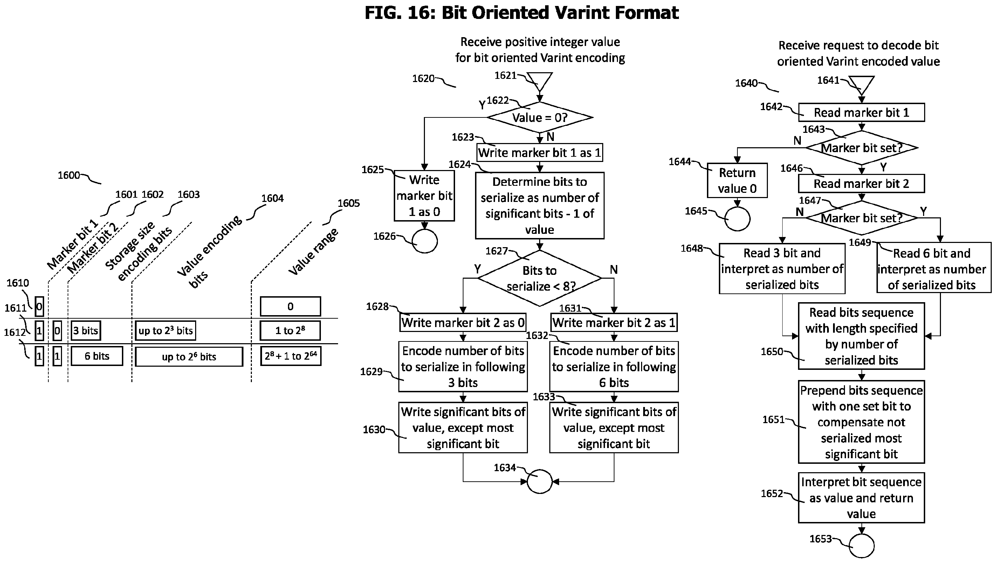

The layout 1330 of a compressed histogram datapoint may start with a delta compressed representation of the timestamp data, containing the difference between timestamp of the current and the last histogram data point. If histogram data points are provided with a constant frequency, and the difference between two histogram timestamps is stable, also delta-of-delta compression may be applied. Delta-of-delta compression applies delta calculation on already calculated delta values. In case of timestamps with constant frequency, the most probable result of delta-of-delta compression is the value 0. When using the bit oriented Varint encoding as described in FIG. 16, storing the value 0 only requires one bit. Therefore, it is desired to use delta compression variants generating the value 0 with high probability.

The compressed timestamp information 1331 may be followed by a bucket/multiplicity compression indicator 1332, which specifies whether following compressed bucket index/multiplicity tuples 1335 are either delta compressed according to bucket index (variant 1335a) or multiplicity (variant 1335b). The bucket/multiplicity compression indicator 1332 may be stored in form of a single bit. A serialized bucket count 1333 follows the bucket index/multiplicity compression indicator, which specifies the number of compressed bucket index/multiplicity tuples 1335 that are stored for the histogram. Depending on volatility of bucket counts for consecutive histogram data points, also serialized bucket counts 1333 of consecutive compressed histogram datapoints may be delta compressed.

A bucket sequence 1334, containing a number of compressed bucket index/multiplicity tuples 1335, according to the value stored in the serialized bucket count 1333 field, follows the serialized bucket count field and finalizes the storage layout of a compressed histogram data point.

A compressed bucket index/multiplicity tuple 1335 may contain two Varint encoded values, one representing a bucket index and the other one representing the multiplicity of observations for the bucket represented by the bucket index. One of the two values may be delta compressed. A first variant 1335a may use delta compression for the bucket index value 1341 and store multiplicity of buckets 1342 as Varint value, without further compression. As bucket index values are unique for a histogram, the delta index delta value may be decremented by 1 without adverse compression effects or losing information. Assuming that received index values are rather dense, i.e., the difference between two consecutive index values is 1, reducing this difference by one vastly increases the probability of receiving index value deltas with value 0, which can be representing with just one bit when using the bit oriented Varint scheme described in FIG. 16.

A second variant 1335b may store a delta value for multiplicity 1343 and store the bucket index 1344 as Varint value without further compression. As multiplicity values are not unique for a histogram, reducing the difference value of consecutive multiplicity values is not useful, because it may lead to negative delta values, which cannot be represented efficiently in Varint schemes.

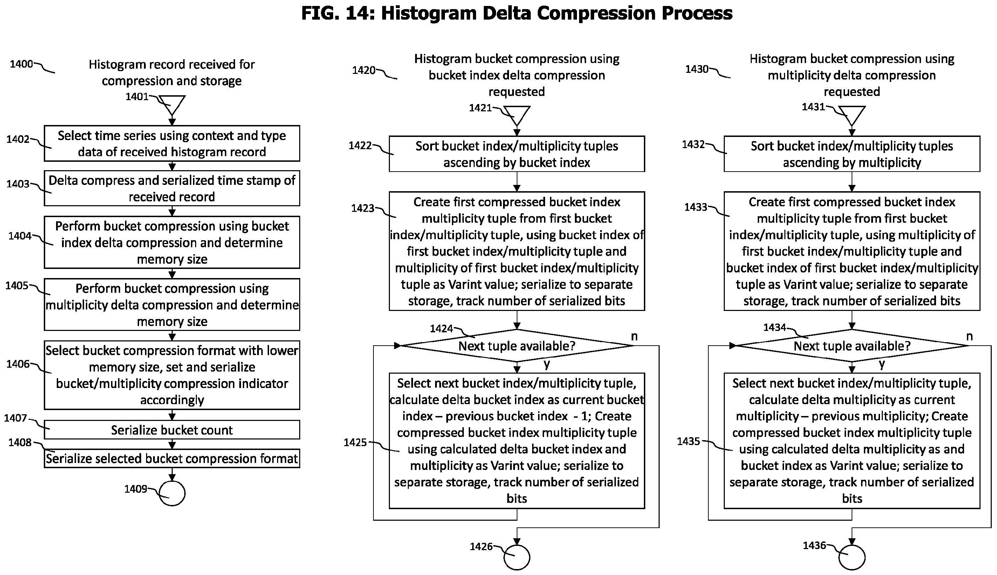

Coming now to FIG. 14, which provides flow charts for the adaptive compression of histogram records 1300 into compressed histogram data points.

Flow chart 1400 describes the overall compression process, including compressing histogram buckets 1310 using delta compression for bucket index values as first variant, compressing histogram buckets 1310 using delta compression for multiplicity values as second variant, and then selecting the variant requiring less storage space. Flow charts 1420 and 1430 show the two delta compression variants for histogram bucket sequences, where the bucket index delta compression variant is depicted in flow chart 1420, and the multiplicity delta compression variant in flow chart 1430.

The compression process 1400 starts with step 1401, when a histogram record 1300 is received for compression. Following step 1402 uses context and dimensionality data 1301 and type data to select the time series for the histogram record, and subsequent step 1403 may then calculate a delta or a or a delta of delta compressed value for the time stamp 1302 of the histogram record and append it to the time series.

Step 1404 may then apply the compression variant applying delta compression on bucket index values, as described in flow chart 1420 to the bucket index/multiplicity tuples 1311 of the received histogram record, and step 1405 may perform the compression applying delta compression on multiplicities, as described in flow chart 1430 on the bucket tuples 1311. Steps 1404 and 1405 may store the result of the compression in separate memory areas and may provide respective memory size required to store each compression result.

Following step 1406 may then select the compression variant with lower memory size, set the bucket index/multiplicity compression indicator 1332 accordingly and append it to the selected time series. Afterwards, step 1407 may determine the serialized bucket count 1407 for the received histogram record (i.e., number of bucket index/ multiplicity tuples 1311 contained in the received histogram record 1300), optionally delta compress it and serialize it to the selected time series. Following step 1408 may then serialize the selected histogram bucket compression variant to the selected time series. The process then ends with step 1409.

The compression of a set of bucket index/ multiplicity tuples 1311 by applying delta compression to bucket index data 1313 is shown in flow chart 1420. The process starts with step 1421, when a set of bucket index/ multiplicity tuples 1311 is received for compression. Following step 1422 may then sort the received tuples ascending by their bucket index 1312, and subsequent step 1422 may then store bucket index 1312 and multiplicity 1313 of the first tuple without applying delta compression. Step 1422 may store a Varint encoded version of those values, using the bit oriented Varint encoding scheme shown in FIG 16.

Following decision step 1424 may then determine whether a next tuple 1311 is available, and in case no next tuple exists, terminate the process with step 1426. Otherwise, step 1425 is executed, which selects the next tuple 1311, calculates a delta compressed value for the bucket index of the tuple, by subtracting the bucket index of the previous tuple form the bucket index of the current tuple and decrementing the result of the subtraction by 1. The delta compressed value for the bucket index and the multiplicity value for the current tuple may then be Varint encoded and stored.

Afterwards, the process returns to step 1424 to process the next tuple. After all tuples are processed, the process ends with step 1426.

The process may store compressed tuples in a separate memory area and track the number of bits written to this memory area. After all tuples are processed, the process may provide the memory area containing the compressed tuples and the memory size required to store the compressed tuples in bits.

The compression variant 1430 that applies delta compression to multiplicity values 1313 of histogram tuples 1311, starts with step 1431, when a set of histogram buckets is received for compression. Following step 1432 may then sort the histogram tuples 1311 ascending by their multiplicity values, and subsequent step 1433 may then store bucket index and multiplicity value of the first bucket in Varint format, without applying delta compression.

Afterwards, decision step 1434 may determine whether a next tuple is available and terminate the process with step 1436 in case none is available.

Otherwise, step 1435 is executed, which fetches the next tuple and calculates a delta value for the multiplicity of the tuple by subtracting the multiplicity value of the previous tuple from the multiplicity value of the current tuple, and then stores multiplicity delta value and bucket index in Varint format.

Afterwards, the process returns to step 1434, until all tuples are processed, and then ends with step 1436.

This process may also store compressed tuples in a separate memory area, and after termination provide this separate memory area and the number of bits required to store the compressed tuples.

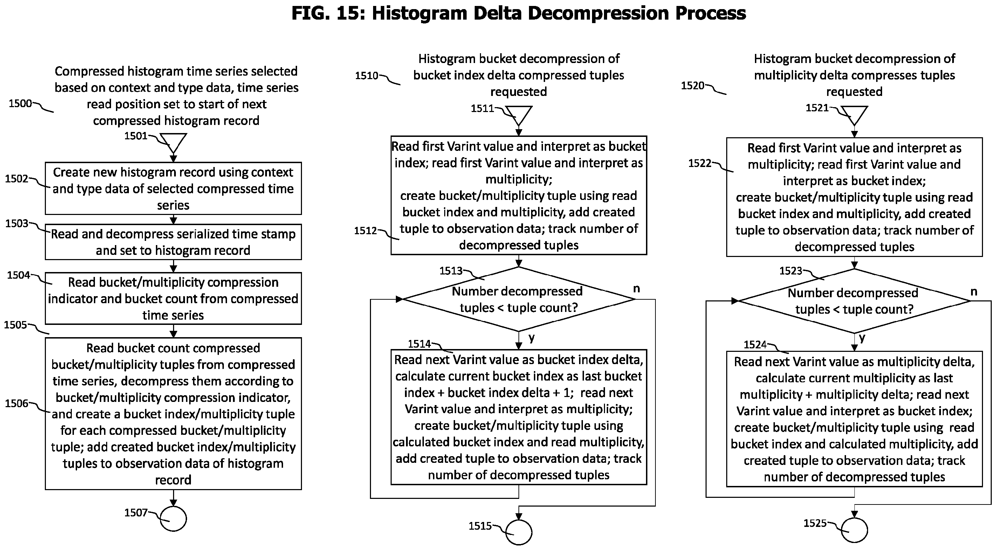

Coming now to FIG. 15, which describes the decompression of a histogram data point 1330, which was compressed as described in FIG. 14.

Flow chart 1500 describes the overall decompression process and flow charts 1510 and 1520 describe the decompression variants for histogram tuples 1311 applying delta compression on bucket index data or on multiplicity data.

The decompression process 1500 starts with step 1501, when a time series for decompressing a compressed histogram data point 1330 was selected, and the start position of the compressed histogram data point was selected in the time series data. Following step 1502 may then create a new histogram record 1300 and set context/locality dimensionality data 1301 and type data 1302 using data meta data from the selected time series. Following step 1503 may then read and decompress the serialized time stamp data for the histogram data point and set it to the created histogram record. Afterwards, step 1504 may read the bucket index/ multiplicity compression indicator 1332 and the bucket count 1333 from the time series data.

Following step 1506 may then use the bucket index/ multiplicity compression indicator 1332 to determine the compression variant that was used to compress and store the bucket index/multiplicity tuple 1313 of the histogram. Step 1506 may then select the appropriate decompression method based on the bucket index/ multiplicity compression indicator and use this decompression method to decompress the number of bucket/multiplicity tuples 1335 that is specified in the serialized bucket count 1333. The process then ends with step 1507.

The decompression of histogram tuples that were compressed by applying delta compression to bucket index data is shown in flow chart 1510. The decompression process starts with step 1511, when the decompression of a number of histogram tuples is requested. Following step 1512 may read two Varint values, interpret them as bucket index and multiplicity, create a bucket index/multiplicity tuple 1311 using those values, and append the created tuple to the observation data section 1310 of a histogram record. Step 1512 may also keep track of already decompressed tuples. Following decision step 1513 may compare the number of already decompressed tuples with the serialized bucket count 1333 and terminate the process with step 1515 if the number of decompressed tuples is not smaller than the serialized bucket count.

Otherwise, step 1514 is executed, which reads the two next Varint values, selects the value representing the delta compressed bucket index and decompresses it by adding it to the bucket index of the previously decompressed tuple and incrementing the result of the addition by 1. The decompressed bucket index value, and the other read value, which is interpreted as multiplicity value are used to create a new histogram tuple 1311, which is appended to the observation data section 1310 of a histogram record 1300. Afterwards, the process continues with step 1513 to decompress the next tuple. After all tuples are decompressed, the process ends with step 1515.

The decompression process of histogram tuples that were compressed by applying delta compression to tuple multiplicity data is shown in flow chart 1520 and starts with step 1521 when decompression of a number of histogram tuples 1311 is requested. Following step 1522 reads the first two Varint values, interprets them as bucket index and multiplicity, creates a tuple record 1311 using those values and appends the tuple 1311 to the observation data 1310 of a histogram record. 1300. Following decisions step 1213 determines whether all required histogram tuples are already decompressed, and in this case terminates the process with step 1525.

Otherwise step 1524 is executed, which reads the next two Varint values and interprets one of them as delta compressed multiplicity value. The delta compressed multiplicity value is decompressed by adding the multiplicity value of the last tuple to it. The decompressed multiplicity value, and the other read value, which is interpreted as bucket index value, are used to create a histogram tuple 1311, which is added to the observation data 1310 of a histogram record. Afterwards, the process continues with step 1523 to decompress the next tuple. The process ends with step 1525 after all required tuples are decompressed.

Coming now to FIG. 16, which conceptually describes a bit oriented Varint encoding scheme for positive integer values of up to 8 bytes storage size. The left side of FIG. 16 shows the memory layout of the encoding scheme, and the right side of the figure shows flow charts for encoding and storing values according to this scheme and for reading and interpreting them. For positive values, this bit oriented Varint encoding scheme maybe be used as a replacement for byte oriented Varint encoding schemes. Consequently, this encoding scheme may also be used as storage formats of positive integer values that are generated by the here described delta compression variants. Both byte oriented and bit oriented Varint encoding schemes may be referred to as variable length quantity storage schemes.

The memory layout 1600 of the encoding scheme starts with a first marker bit 1601, which indicates whether the encoded value is 0. If the encoded value is 0, only this first marker bit is stored with value 0. Otherwise, the first marker bit is set to 1, and a second marker bit 1602 is written. The second marker bit distinguishes between values in the range from 1 to 2⁸ and values in the range from 2⁸+1 to 2⁶⁴. If the second marker bit is set to 0 to indicate a value in the range from 1 to 2⁸, then the next 3 bits are used as storage size encoding bits 1603, which are used to store the number of following value encoding bits 1604. In this case, up to 8 value encoding bits 1603 may be stored, which can store values 105 up to 2⁸. Otherwise, the second marker bit is set to 1 to indicate a value in the range from 2⁸ + 1 to 2⁶⁴. In this case, the next 6 bits are used as storage size encoding bits 1604, which can address up to 64 bits of stored value encoding bits. Therefore, in this case values up to 2⁶⁴ can be stored by the value encoding bits. Depending on the state of the marker bits 1601 and 1602, a value range 1605 of 0 (marker bit 1 set to 0), 1 to 2⁸ (marker bit 1 set to 1 and marker bit 2 set to 0) or 2⁸ + 1 to 2⁶⁴ (marker bits 1 and 2 set to 1) is represented by the encoding scheme.

The compression of a received positive integer value, according to the bit oriented Varint encoding scheme is shown in flow chart 1620 and starts with step 1621, when a positive integer is received for encoding and storage. Following decision step 1622 determines whether the received integer value represents the value 0 and, in this case, continues with step 1625, which stores marker bit 1 with value 0, to indicate a stored 0 value. The process then ends with step 1626. Otherwise, the process continues with step 1623, which writes marker bit 1 wit value 1, indicating a value different from 0. Following step 1624 then first determines the number of significant bits of the received integer value and then subtracts 1 from the number of significant bits to calculate the number of bits to serialize. Per definition, the last bit, or most significant bit of the sequence of significant bits of an integer value is always 1. Therefore, it is not required to explicitly store this highest significant bit and the number of bits to serialize can be decremented by 1.

Following decision step 1627 then determines whether bits to serialize is smaller than 8, and in this case continues the process with step 1628, which writes marker bit 2 1602 with value 0. A marker bit 2 having value 0 indicates that the following 3 bits are used to encode the number of stored significant bits.

Next, step 1629 is executed which writes the number of bits to serialize determined by step 1624 to the following 3 bits. As the number of bits that should be serialized is less than 8, 3 bits suffice to encode this value. Following step 1630 then extracts the sequence of significant bits from the receive integer value, removes the bit with highest significance from this sequence and writes the remaining sequence. The process then ends with step 1634.

If decision step 1627 determines that the number of bits to serialize exceed 8, the process continue with step 1631, which writes marker bit 2 1602 with value 1, which indicates that the next 6 bits are used to store the number of bits to serialize. As the proposed encoding scheme is designed for integer values of up to 8 bytes, 6 bits suffice as storage space for the number of bits to serialize, even of the whole 8 bytes of the received integer need to be stored.

Following step 1632 then encodes the number of bits to serialize determined by step 1624 in the following 6 bits and subsequent step 1633 determines the significant bit sequence of the received integer value, removes the most significant bit from this sequence and stores the remaining sequence. The process then ends with step 1634.

The process of decoding an integer value stored according to the proposed bit oriented Varint encoding scheme is described by flow chart 1640 and starts with step 1641, when the request to decode such an integer value is received, and the start of the storage position of the encoded value is determined. Following step 1642 then reads marker bit 1 1601, and decision step 1643 continues the process with step 1644 if the value of marker bit 1 is 0 (not set), which indicates an encoded value 0. Step 1644 returns the encoded 0 value, and the process ends with step 1645.

Otherwise, the process continues with step 1646, which reads marker bit 2 1602. Following decision step 1647 then continues with step 1648 if marker bit 2 is not set, which indicates that the next 3 bits are used to encode the number of serialized bits for the stored integer value. Step 1648 then reads the next 3 bits and interprets those 3 bits as the number of bits that were serialized for the integer value. If marker bit 2 is set, the process continues with step 1649, which reads the next 6 bits and interprets them as the number of serialized bits for the integer value.

Step 1650 is executed after step 1648 or 1649 and uses the number of serialized bits determined by one of those steps to read a bit sequence of the length defined by this number of serialized bits. Following step 1651 then prepends the read bit sequence with one set bit, to compensate for the most significant bit that was not stored by step 1630 or 1633 during writing/encoding the value. Following step 1652 then interprets the bit sequence created by step 1651 as integer value and returns this integer value. The process then ends with step 1653.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

The features disclosed in this specification, the figures and / or the claims may be material for the realization of the invention in its various embodiments, taken in isolation or in various combinations thereof.

## Claims

1. A computer-implemented method for encoding monitored data in a distributed computing network, comprising:
- receiving, by a computer processor, two or more aggregation records in a sequence of aggregation records, each aggregation record represents measures of a performance metric and includes an observation count of the measurements represented by the aggregation record and at least two composite statistics for the performance metric, where the performance metric indicates performance of the computer network during a period of time;
- constructing a data stream for the sequence of aggregation records, the data stream having a header section and a payload section; and
- storing the data stream in a non-transitory memory,
wherein, for each of the two or more aggregation records, extracting the observation count from a given aggregation record and, in response to the observation count being one, processing the given aggregation record by
- deriving a measurement value for the performance metric from the given aggregation record,
- compressing the measurement value for the performance metric using delta compression, and
- compressing the observation count using delta compression, and
- formatting the payload section of the data stream with the compressed observation count and the compressed measurement value for the performance metric but excluding the at least two composite statistics for the performance metric.

2. The method of claim 1 further comprises receiving a first aggregation record in the sequence of aggregation records and storing the first aggregation record uncompressed in the payload section of the data stream.

3. The method of claim 1 or 2 further comprises, in response to the observation count being greater than one, processing the given aggregation record by:
- compressing each of the at least two composite statistics using delta compression,
- compressing the observation count using delta compression, and
- formatting the payload section of the data stream with the compressed observation count and the compressed composite statistics.

4. The method of any of the preceding claims, further comprising:
- retrieving the data stream from the non-transitory memory;
- processing the payload section of the data stream in sequence by decoding the compressed observation count and decoding data associated with the compressed observation count according to corresponding uncompressed observation count.

5. The method of any of the preceding claims, wherein the at least two composite statistics include a minimum value for the performance metric during the period of time, a maximum value for the performance metric during the period of time, and at least one of an average of the measures during the period of time or a sum of the measures during the period of time.

6. The method of claim 5 further comprises, in response to the observation count being two, processing the given aggregation record by
- extracting a first measurement value for the performance metric from the minimum value,
- extracting a second measurement value for the performance metric from the maximum value,
- compressing the first measurement value and the second measurement value using delta compression,
- compressing the observation count using delta compression, and
- formatting the payload section of the data stream with the compressed observation count, the compressed first measurement value, and the second measurement value but excluding remainder of the at least two composite statistics for the performance metric.

7. The method of claim 5 or 6 further comprises, in response to the observation count being greater than two and the minimum value for the performance metric equals the maximum value for the performance metric, processing the given aggregation record by
- extracting a first measurement value for the performance metric from the minimum value,
- extracting a second measurement value for the performance metric from the maximum value,
- compressing the first measurement value and the second measurement value using delta compression,
- compressing the observation count using delta compression, and
- formatting the payload section of the data stream with the compressed observation count, the compressed first measurement value, and the second measurement value but excluding remainder of the at least two composite statistics for the performance metric.

8. The method of any of the preceding claims, wherein the at least two composite statistics includes a minimum value for the performance metric during the period of time, a maximum value for the performance metric during the period of time, a sum of the measures during the period of time, and a set of statistical moments for the performance metric, and further comprises, in response to the observation count being three, processing the given aggregation record by
- extracting a first measurement value for the performance metric from the minimum value,
- extracting a second measurement value for the performance metric from the maximum value,
- extracting a third measurement value for the performance metric from the sum,
- compressing the first measurement, the second measurement and the third measurement using delta compression, and
- formatting the payload section of the data stream with the compressed first, second and third measurements but excluding the set of statistical moments.

9. The method of any of the preceding claims, further comprising capturing measures of the performance metric using an agent instrumented in a software application executing on a computing device in the computing network.

10. A computer-implemented method for encoding monitored data in a distributed computing network, comprising:
- receiving, by a computer processor, two or more observation records in a sequence of observation records, each observation record represents measures of at least two performance metrics, where measurement value for one performance metric of the at least two performance metrics can be derived from measurement value for other performance metric of the at least two performance metrics;
- constructing a data stream for the sequence of observation records, the data stream having a header section and a payload section; and
- storing the data stream in a non-transitory memory,
wherein, for each of the two or more observation records, processing a given observation record by
- compressing the measurement value for the one performance metric using delta compression, and
- formatting the payload section of the data stream only with the compressed measurement value for the one performance metric.

11. The method of claim 10 further comprises:
- retrieving the data stream from the non-transitory memory;
- extracting the compressed measurement value for the one performance metric from the data stream;
- decompressing the compressed measurement value for the one performance metric; and
- deriving the measurement value for the other performance metric from the uncompressed measurement value for the one performance metric.

12. The method of claim 10 or 11 further comprises, for each of the two or more observation records, formatting the payload section of the data stream with an indicator for the one performance metric, where the indicator is associated with the compressed measurement value for the one performance metric.

13. The method of claim 12 further comprises:
- retrieving the data stream from the non-transitory memory;
- extracting the compressed measurement value for the one performance metric from the data stream;
- decompressing the compressed measurement value for the one performance metric; and
- applying the indicator on the uncompressed measurement value to derive the measurement value for the other performance metric from the uncompressed measurement value for the one performance metric.

14. The method of any of claims 10 to 13, further comprising capturing measures of the at least two performance metrics using an agent instrumented in a software application executing on a computing device in the computing network.

15. The method of any of claims 1 to 9 or 12 to 14, wherein formatting the payload section of the data stream further comprises applying a variable-length quantity storage scheme to store integer values in the payload section of the data stream, where the variable-length quantity storage scheme includes a first marker bit for storing integer value of zero, a second marker bit whose value distinguishes between a first range of values and a second range of values, and storage size bits indicating number of bits needed to store an integer value.
